# EUROPEAN PATENT SPECIFICATION

(11) **EP 4 493 636 B1**
(45) Date of publication and mention of the grant of the patent: **18.11.2026**
(21) Application number: 23716729.1
(22) Date of filing: 17.03.2023
(51) Int. Cl.: C09K 5/04, C10M 171/00

(54) **HYDROCARBON ADDITIVES FOR 1234YF AND HFC COMPOSITIONS, METHODS FOR THEIR PRODUCTION, STORAGE AND USAGE**
KOHLENWASSERSTOFFADDITIVE FÜR 1234YF- UND HFC-ZUSAMMENSETZUNGEN, VERFAHREN ZU IHRER HERSTELLUNG, LAGERUNG UND VERWENDUNG
ADDITIFS HYDROCARBONÉS POUR COMPOSITIONS 1234YF ET HFC, LEURS PROCÉDÉS DE PRODUCTION, DE STOCKAGE ET D'UTILISATION

(30) Priority: 18.03.2022 US 202263321118 P; 18.03.2022 US 202263321120 P; 23.05.2022 US 202263344899 P; 23.05.2022 US 202263344904 P
(43) Date of publication of application: 22.01.2025
(60) Divisional application: 26210478.9
(73) Proprietor: The Chemours Company FC, LLC, Wilmington, Delaware 19801 (US)
(72) Inventor: PENG, Sheng, Hockessin, Delaware 19707 (US); MINOR, Barbara Haviland, The Villages, Florida 32163 (US)
(74) Representative: Abitz & Partner
(86) International application number: PCT/US2023/015471
(87) International publication number: WO 2023/177852

(56) References cited:
- US-A1- 2017 058 174
- US-A1- 2021 108 119
- US-A1- 2021 179 909

## Description

### BACKGROUND OF THE INVENTION

### Related Application

This application relates to the entire disclosure of Applicants' concurrently filed application No. FL2040-WO01, and U.S. Provisional Application Nos. 63/321120 and 63/321,118 each filed March 18, 2022, and U.S. Application Nos. 63/344,904 and 63/344,899 each filed May 23, 2022, by the same named inventors, Sheng Peng and Barbara Haviland Minor of The Chemours Company FC, LLC.

### FIELD OF THE INVENTION

The present invention relates to stabilized composition mixtures comprising HFO-1234yf (2,2,2,3-tetrafluoropropene), at least one of a C₁ and/or C₂ hydrofluorocarbon, optionally containing carbon dioxide, and at least one oligomerization/polymerization inhibitor selected from one or more xylenes.

### DESCRIPTION OF RELATED ART

Fluoroolefin and fluoroolefin mixtures have been proposed as refrigerants, in-part due to their low global warming potential (GWP), low ozone depletion potential (ODP). These products have been extensively tested for chemical stability and compatibility with materials typically used in air conditioning or refrigeration systems (ref. "1234yf - A Low GWP Refrigerant For MAC, Honeywell/DuPont Joint Collaboration" presentation to JAMA/JARIA, October 3, 2007) and shown to be stable under typical operating conditions. However, it has been observed that certain fluoroolefins oligomerize or polymerize and produce unwanted by-products via oligomerization or homopolymerization under abnormal conditions such as extreme temperatures or contact with other compounds in a contaminated system (e.g., excessive oxygen, oxidizing chemicals, or radical generating compounds, among various contaminants). Such oligomerization or homopolymerization may occur when fluoroolefins are utilized as refrigerants or heat transfer fluids, or when the fluoroolefin alone or in admixture with other refrigerant components are stored in closed container systems, e.g., when fluoroolefins are stored in transport containers or canisters.

The undesirable by-product formation may occur by any number of different mechanisms. Examples of stabilized compositions are disclosed in JP 2009298918; U.S. Pat. Nos. 6,969,701; 8,133,407; US 2006/0022166; US 2006/0043330; US 2008/0157022; and WO 2007/126760 as well as EP 2057245; U.S. Pat. Nos. 8,101,094; 8,535,555; 8,097,181; 8,075,796. Other stabilized compositions are disclosed in related and copending U.S. Patent Publication Nos. 2021/0108119, 2021/0040368, 202110340421.

Under certain abnormal conditions and in the presence of undesired contaminants that can function as an initiator, fluoroolefins may oligomerize or homopolymerize in the presence of certain contaminants that may be present. Accordingly, there is a continued need in this art for stabilized fluoroolefin containing compositions having reduced, if not eliminated potential to oligomerize or homopolymerize.

### SUMMARY OF THE INVENTION

Disclosed herein are refrigerant mixtures which comprise at least 2,3,3,3-tetrafluoropropene (HFO-1234yf), at least one of a C₁ and/or a C₂ hydrofluorocarbon, optionally carbon dioxide, and an effective amount of radical inhibiting additive up to about 0.5 % wt.% based on the total weight of the refrigerant components in the composition which prevents oligomerization/polymerization of the fluoroolefin component or components in the composition. The effective amount of the radical inhibiting additive inhibits oligomerization and/or polymerization of the olefin component(s) substantially without affecting the performance or compatibility of the stabilized refrigerant compositions, even when combined with refrigerant oils and other conventional additives.

Representative C₁ and C₂ hydrofluorocarbon compounds include but are not limited to difluoromethane (HFC-32 or R-32), pentafluoroethane (CF₃CHF₂, HFC-125, R-125) and 1,1,1,2-tetrafluoroethane (CHF₃CFH₂, HFC-134a, R-134a). Effective amounts of a radical inhibiting additives, i.e., oligomerization/ polymerization inhibitor which are xylenes, of up to 0.1 weight percent, 0.2 weight percent, 0.3 weight percent, 0.4 weight percent and 0.5 weight percent of meta-, ortho- or para- xylene, optionally with at least one compatibilizing agents to improve compatibility/miscibility with lubricants, including mineral oil and alkyl benzene as well as POE, PVE and PAG, and optionally at least one solubilizing agent to improve solubility with UV dyes and other refrigerant additives..

Also disclosed herein are methods for reducing formation of oligomer and homopolymer products or by-products comprising contacting a composition comprising at least 2,3,3,3-tetrafluoropropene (HFO-1234yf) and at least one of difluoromethane (HFC-32), pentafluoroethane (HFC-125) and 1,1,1,2-tetrafluoroethane (HFC-134a), optionally containing at least one of HFC-125 and CO₂ with an effective amount of the radical inhibiting additive meta-, ortho- or para- xylene, to form a stable composition or composition blends. and methods of storing stabilized fluoroolefins mixtures in storage vessels or containers.

Also disclosed herein are methods for using the stabilized fluoroolefin-hydrofluorocarbon mixtures as blends as a heat exchange fluid.

Also disclosed herein are vessel loaded with stabilized fluoroolefin-hydrofluorocarbon mixtures including at least an effective amount of at least one oligomerization / polymerization inhibitor, more specifically, meta-, ortho- or para- xylene and mixtures thereof.

### DETAILED DESCRIPTION OF THE INVENTION

The present invention can improve the ability of hydrofluoroolefin containing compositions, such as a mixture of 2,3,3,3-tetrafluoropropene and at least one of a C₁ and/or C₂ hydrofluorocarbon comprising difluoromethane, pentafluoroethane and 1,1,2,2-tetrafluoroethane, optionally containing carbon dioxide, to withstand standard storage or abnormal conditions, and avoid potential problems associated with initiators which may be present (e.g., contaminants, such as air, Loctite, cleaning solution containing peroxides) causing a fluoroolefin (e.g., tetrafluoropropene) to oligomerize or homopolymerize, by adding at least one inhibitor. Further, fluoroolefin compositions comprise a blend of at least HFO-1234yf and one or more of R-32, R-125, and R-134a.

The 2,3,3,3-tetrafluoropropene may also be referred to as 2,3,3,3-tetrafluoropropene (HFO-1234yf), HFC-1234yf, R-1234yf or 1234yf. HFO-1234yf may be made by methods known in the art, such as by dehydrofluorination 1,1,1,2,3-pentafluoropropane (HFC-245eb) or 1,1,1,2,2-pentafluoropropane (HFC-245cb).

Difluoromethane (HFC-32 or R-32) is commercially available or may be made by methods known in the art, such as by dechlorofluorination of methylene chloride. Similarly, pentafluoroethane and 1,1,2,2-tetrafluoroethane are commercially available or may be made by methods known in the art.

Disclosed are blend of two or more refrigerant components, such as, HFO-1234yf and (1) HFC-32, (2) HFC-32 and HFC-134a, (3) HFC-32, HFC-125, HFC-134a and carbon dioxide, as well as commercially available blends including but not limited to R513a, R449a, R454C and R463A.

By "inhibitor" it is meant to refer to at least one compound in accordance with the present invention that reduces, if not eliminates, conversion of hydrofluoroolefins into oligomers or polymers. While oligomerization or homopolymerization reactions may be accelerated by relatively high temperatures, such reactions may also occur under ambient conditions depending upon the concentration and type of initiator (e.g., contaminant). The inhibitor can function as a radical inhibitor or a chain transfer reagent or both without affecting the refrigeration performance or compatibility of the composition with refrigerant oil(s) and equipment (e.g., resins used in seals). The stabilized compositions may be useful in cooling/heating systems and as replacements for existing refrigerants with higher global warming potential.

To avoid possible instability of at least the 2,3,3,3-tetrafluoropropene (HFO-1234yf) fluoroolefin, it has been found that adding certain inhibitor compounds, namely meta-, ortho- or para- xylene, to fluoroolefin containing compositions will increase the stability thereof during packaging, storage and usage in refrigeration, air-conditioning or heat pump system applications will inhibit the formation of oligomer and/or homopolymer products and by-products. In one embodiment, the invention relates to compositions comprising 2,3,3,3-HFO-1234yf and HFC-32, and an effective amount of an inhibitor that can interact or react with O₂ and fluoroolefin polyperoxides and in turn inhibit or preclude reaction of such compounds with the hydrofluoroolefinIn certain embodiments 2,3,3,3-HFO-1234yf and HFC-32 compositions comprise from about 20 to about 85 weight percent HFO-1234yf and from about 80 to about 15 weight percent HFC-32 relative to the total amount of HFO-1234yf and HFC-32 in the composition. In certain embodiments the compositions comprise from about 20 to about 40 weight percent HFO-1234yf and from about 60 to about 80 weight percent HFC-32. In other embodiments, the compositions contain from about 30 to about 32 weight percent HFO-1234yf and from about 68 to about 70 weight percent HFC-32. In other embodiments, the compositions comprise from about 77 to about 80 weight percent HFO-1234yf and from about 20 to about 23 weight percent HFC-32.

In certain embodiments 2,3,3,3-HFO-1234yf and HFC-32 compositions comprise from about 20 to about 85 weight percent HFO-1234yf and from about 80 to about 15 weight percent HFC-32; from about 20 to about 40 weight percent HFO-1234yf; from about 60 to about 80 weight percent HFC-32; from about 30 to about 32 weight percent HFO-1234yf and from about 68 to about 70 weight percent HFC-32; from about 77 to about 80 weight percent HFO-1234yf; and from about 20 to about 23 weight percent HFC-32 each including up to 0.5 weight percent of and inhibitor selected from meta-, ortho- or para- xylene.

The xylene have the following chemical structures.

**TABLE 1**

| **Chemical name** | **Chemical Structure** |
|---|---|
| | |
| meta-xylene | 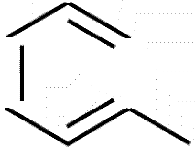 |
| ortho-xylene | 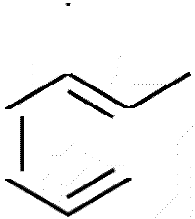 |
| para-xylene | 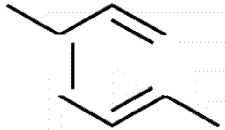 |

In one embodiment, the invention relates to compositions comprising HFO-1234yf and HFC-134a and an effective amount of an inhibitor that can interact or react with O₂ and fluoroolefin polyperoxides and in turn inhibit or preclude reaction of such compounds with the hydrofluoroolefin. The inhibitors include meta-, ortho-, para- xylene and mixtures of two or more in an effective amount up to 0.5 % by weight of the HFO and HFC components.

In one embodiment, the invention relates to compositions comprising HFC-125, HFO-1234yf, and HFC-134a and an effective amount of an inhibitor that can interact or react with O₂ and fluoroolefin polyperoxides and in turn inhibit or preclude reaction of such compounds with the hydrofluoroolefin. The inhibitor includes meta-, ortho-, para- xylene and mixtures of two or more, used in an effective amount up to 0.5 % by weight of the HFO and HFC components.

In one embodiment, the invention relates to compositions comprising HFC-125, HFC-134a, HFC-32, HFO-1234yf and CO₂, and an effective amount of an inhibitor that can interact or react with O₂ and fluoroolefin polyperoxides and in turn inhibit or preclude reaction of such compounds with the hydrofluoroolefin. The inhibitor includes meta-, ortho-, para- xylene and mixtures of two or more, used in an effective amount up to 0.5 % by weight of the HFO and HFC components.

The inhibiting additives of the present invention can prevent polymerization by either functioning as polymerization inhibitors or chain transfer reagents, thereby preventing oligomerization or homopolymerization of the 2,3,3,3-tetrafluoropropene (HFO-1234yf) component of the refrigerant composition, mixture, or blend. The stabilizing inhibiting additives may also be useful as compatibilizing agents to improve compatibility/miscibility with lubricants, including mineral oil and alkyl benzene as well as POE, PVE and PAG. They may also be useful as solubilizing agents to improve solubility with UV dyes and other refrigerant additives.

.

According to the invention, the inhibitor comprises meta-, ortho- para- xylene and mixtures of two or more.

In one embodiment the composition of the present invention comprises or consists essentially of:
at least HFO-1234yf;
at least one of a C₁ and C₂ hydrofluorocarbon, and optionally carbon dioxide;
an effective stabilizing amount of at least one inhibitor comprising: xylene; and,
optionally, at least one additional HFO, HCFO, HFC different from (ii), HCC, HCFC, nitrogen, and air component.

Embodiments of the invention relate to a composition or composition blend comprising:
a. at least 2,3,3,3-tetrafluoropropene (HFO-1234yf);
b. one or more C₂ or C₃ hydrofluorocarbon;
c. an effective amount of at least one oligomer/polymer inhibitor comprising meta-, ortho- para- xylene,; and
d. optionally, at least one additional HFO, HCO, HFC, HCC, HCFC, nitrogen, air, and carbon dioxide (CO₂) component.

Embodiments of the invention relate to a composition or composition blend comprising:
- at least 2,3,3,3-tetrafluoropropene (HFO-1234yf);
- one or more C₂ or C₃ hydrofluorocarbon;
- 0.001 weight percent up to 0.3 weight percent of meta-, ortho- para-xylene, as the effective amount of oligomerization inhibitor; and
- optionally, at least one additional HFO, HCO, HFC, HCC, HCFC, nitrogen, air, and carbon dioxide (CO₂) component.

Another embodiment of the invention relates to a method for reducing oligomerization or homopolymerization of a composition comprising at least one fluoroolefin, which is caused by the presence of an inadvertent or undesired contaminant present in at least one of conduits, transfer lines, including tubing and piping, and other systems used for handling the fluoroolefin containing compositions; packaging (containers), and refrigeration units, air-conditioning, heat pump or chiller systems, wherein said method comprises adding an oligomer inhibitor which is meta-, ortho- para- xylene to the composition being conveyed.

A further embodiment of the invention relates to a composition containing at least 2,3,3,3-tetrafluoropropene (HFO-1234yf) and at least one of HFC-32, HFC-125. HFC-134a and carbon dioxide within a container, wherein the fluoroolefin of the composition has a reduced potential to oligomerize or homopolymerize in comparison to compositions without the inventive inhibitor composition.

One embodiment of the invention relates to a composition comprising at least 2,3,3,3-tetrafluoropropene (HFO-1234yf) and HFC-32, and an effective amount of at least one inhibitor and wherein the composition is substantially free of oligomeric, homopolymers or other polymeric products derived from 2,3,3,3-tetrafluoropropene (HFO-1234yf).

Another embodiment of the invention relates to any of the foregoing compositions wherein the composition comprises greater less than about 0.03 wt.% of oligomeric, homopolymers or other polymeric products.

Another embodiment of the invention relates to any of the foregoing compositions wherein the inhibitor is present in amounts up to about 0.5 wt.%, less than 0.5 w/t% but greater than 0, e.g., 0.001 wt.%, 0.005 wt.%, 0.01 wt. %, 0.015 wt. %, 0.02 wt. % 0.03 wt. %, 0.04 wt. %, 0.05 wt. % (500 ppm), 0.06 wt.%, 0.07 wt.%, 0.08 wt.%,0.09 wt.%, 0.1 wt.% (1000 ppm), 0.2 wt.%, 0.3 wt.% (3000 ppm) 0.4 wt.% and 0.5 wt.%, and all values therebetween, but present in amount sufficient to keep the formation of oligomeric, homopolymers or other polymeric products less than about 0.03 wt.%, or provide a composition free of oligomeric, homopolymers or other polymeric products.

Another embodiment of the invention relates to any of the foregoing further compositions comprising at least one lubricant. In some embodiments, the lubricant is selected from the group consisting of POE, PAG, and PVE.

In a further embodiment the stabilized 2,3,3,3-tetrafluoropropene (HFO-1234yf) and at least one of HFC-32, HFC-125, HFC-134a and carbon dioxide compositions disclosed herein comprise at least one or more of the following gases: air (N₂/O₂ 78/21 ratio), air (N₂/O₂ >78/21 ratio), O₂, N₂, Ar, CH₄ and He.

The stabilized HFO-1234yf and at least one of HFC-32, HFC-125. HFC-134a and carbon dioxide compositions disclosed herein comprise at least one of the following additional components: HFO-1234ze, 1243zf, HFO-Z-1336mzz, HFO-E-1336mzz, HFO-1327mz, HFO-1122, HFO-1122a, HFO-1123, HFO-1233zd, 1224yd, E-1132, Z-1132, 1132a, CFO-1112, HFO-E-1225ye, HFO-Z-1225ye, HFO-1234zc, HFO-1234ye, HFO-1234yc, HFO-1225zc, HFC 152a.

The stabilized HFO-1234yf and at least one of HFC-32, HFC-125. HFC-134a and carbon dioxide compositions disclosed herein comprise at least one of the following additional components: 1234ze, 1243zf, HFO-Z-1336mzz, HFO-E-1336mzz, HFO-1327mz, HFO-1122, HFO-1122a, HFO-1123, HFO-1233zd, HFO-1224yd, HFO-E-1132, HFO-Z-1132, HFO-1132a, HCFO-1112, HFO-E-1225ye, HFO- Z-1225ye, HFO-1234zc, HFO-1234ye, HFO-1234yc, HFO-1225zc, HFC 152a.

The stabilized HFO-1234yf and HFC-32 compositions disclosed herein comprise at least one of the following additional components: HFC-125, HFC-134, HFC-134a, HFC-152a and CO₂ as well as other commercial HFOs (HFO-1234zeE, HFO-1233zdE, etc.)

The stabilized HFO-1234yf and at least one of HFC-32, HFC-125. HFC-134a and carbon dioxide compositions disclosed herein comprise at least one of the following additional components: 143a, 22 and 12

The stabilized HFO-1234yf and HFC-32 compositions disclosed herein comprise at least one of the following components: HFC-134a: R-114, R-114a, R-1122, R-40, R-134, R-143a, R-125

The stabilized HFO-1234yf and at least one of HFC-32, HFC-125. HFC-134a and carbon dioxide compositions disclosed herein comprise at least one of the following additional components: HFC--125, R-115, R-1113, R-40, R-23, R-143a.

The stabilized composition comprises HFO-1234yf and at least one of HFC-32, HFC-125. HFC-134a and carbon dioxide may comprise at least one or more of the following components in R-152a: R-1140, R-161.

The inventive compositions have a variety of utilities including working fluids, which include blowing agents, aerosol propellants, sterilants or, heat transfer mediums (such as heat transfer fluids and refrigerants for use in refrigeration systems, refrigerators, air conditioning systems, heat pumps, chillers, and the like), among others. The inventive compounds are particularly suited for use in mobile air conditioning systems and as a component for making a refrigerant blend for use in stationary heat transfer systems, all of which include one or more fluid circulating circuits, e.g., a refrigeration circuit.

A heat transfer medium (also referred to herein as a heat transfer fluid, a heat transfer composition, or a heat transfer fluid composition) is a working fluid used to carry heat from a heat source to a heat sink.

In certain embodiments the circulating heat transfer medium of an existing refrigerant system is removed and is replaced with a stabilized refrigerant, and to provide a refrigerant circuit containing the stabilized composition disclosed herein using the stabilized composition from a valve refrigerant vessel containing the stabilized compositions.

A refrigerant is a compound or mixture of compounds that function as a heat transfer fluid in a cycle wherein the fluid undergoes a phase change from a liquid to a gas and back.

As use herein, a refrigerant is a compound or mixture of compounds (blend) that function as a heat transfer fluid in a cycle wherein the fluid undergoes a phase change from a liquid to a gas and back.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of' occupies a middle ground between "comprising" and 'consisting of'.

Where applicants have defined an invention or a portion thereof with an openended term such as "comprising," it should be readily understood that (unless otherwise stated) the description should be interpreted to also include such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

The term fluoroolefin, as used herein, describes compounds which comprise carbon atoms, fluorine atoms, and optionally hydrogen atoms. The term chlorofluoroolefin, as used herein, describes compounds which comprise carbon atoms, chlorine atoms, fluorine atoms, and optionally hydrogen atoms. In one embodiment, the fluoroolefins used in the compositions of the present invention comprise compounds with 3-12 carbon atoms. In another embodiment the fluoroolefins comprise compounds with 3 to 10 carbon atoms, and in yet another embodiment the fluoroolefins comprise compounds with 3 to 7 carbon atoms. Representative chlorofluoroolefins and fluoroolefins include but are not limited to all compounds listed in Table 1, below.

| | **Chemical name** | **Chemical formula** |
|---|---|---|
| HCFO-1112 | (E)-1,2-dichloro-1,2-difluoroethylene | CCIF=CCIF |
| | (Z)-1,2-dichloro-1,2-difluoroethylene | |
| HCFO-1113 | chlorotrifluoroethene | CCIF=CF₂ |
| HCFO-1122 | 1-chloro-2,2-difluoroethene | CHCl=CF₂ |
| HCFO-1122a | l-chloro-1,2-difluoroethene | CHF=CCIF |
| HFO-1123 | 1,1,2-trifluoroethylene | CHF=CF₂ |
| HFO-1132 | 1,1-Difluoroethylene | CHF=CHF |
| HFO1132a | 1,1-Difluoroethylene | CH₂=CF₂ |
| HCC-1140 | chloroethene | CH₂=CHCl |
| HFCO-1224yd | (E)-1-chloro-2,3,3,3-tetrafluoropropene | |
| | (Z)-1-chloro-2,3,3,3-tetrafluoropropene | |
| HFO-1225zc | 1,1,3,3,3-pentafluoroprop-1-ene | |
| E-HFO-1225ye | 1,2,3,3,3-pentafluoropropene | CF₃CF=CHF |
| Z-HFO-1225ye | 1,2,3,3,3-pentafluoropropene | CF₃CF=CHF |
| E-HFO-1233zd | (E)-chloro-3,3,3-trifluoropropene | CF₃CH=CHF |
| Z-HFO-1233zd | (Z)-1-chloro-3,3,3-trifluoropropene | |
| E-HFO-1234ze | 1,3,3,3-tetrafluoropropene | CF₃CH=CHF |
| Z-HFO-1234ze | 1,3,3,3-tetrafluoropropene | CF₃CH=CHF |
| HFO-1234ye | 1,2,3,3-tetrafluoropropene | CHF₂CF=CHF |
| HFO-1234zc | 1,1,3,3-tetrafluoro-1-propene | CHF₂CH=CF₂ |
| HFO1234yc | 1,1,2,3-tetrafluoro-1-propene | CH₂FCF=CF₂ |
| HFC-1243zf | 3,3,3-trifluoropropene | CF₃CH=CH₂ |
| HFO-1327mz | 1,1,1,2,4,4,4-heptafluorobut-2-ene | |
| Z-HFO-1336mzz | (Z)-1,1,1,4,4,4-hexafluoro-2-butene | CF₃CH=CHCF₃ |
| E-HFO-1336mzz | (E)-1,1,1,4,4,4-hexafluoro-2-butene | CF₃CH=CHCF₃ |
| HCFC-12 | dichlorodifluoromethane | CCl₂F₂ |
| HCFC-22 | chlorodifluoromethane | CHClF₂ |
| HCFC-23 | trifluoromethane | CHF₃ |
| HCC-40 | chloromethane | CH₃Cl |
| HCFC-114 | 1,2-dichloro-1,1,2,2-tetrafluoroethane | CCIF ₂CClF ₂ |
| HCFC-114a | 1,1-Dichlorotetrafluoroethane | |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH₃CF₃ |
| HFC-152a | 1,1-difluoroethane | CHF₂CH₃ |
| HFC-161 | fluoroethane | CH₃CH₂F |
| CO₂ | carbon dioxide | CO₂ |

Representative, HFC, HCC, HCFC components that can be used in the stabilized compositions disclosed include but are not limited to the compounds listed in Table 1 above.

The compounds listed in Table 1 are available commercially or may be prepared by processes known in the art or as described herein.

1,1,1,4,4-pentafluoro-2-butene may be prepared from 1,1,1,2,4,4-hexafluorobutane (CHF₂CH₂CHFCF₃) by dehydrofluorination over solid KOH in the vapor phase at room temperature. The synthesis of 1,1,1,2,4,4-hexafluorobutane is described in US 6,066,768.

1,1,1,4,4,4-hexafluoro-2-butene may be prepared from 1, 1, 1,4,4,4-hexafluoro-2-iodobutane (CF₃CHICH₂CF₃) by reaction with KOH using a phase transfer catalyst at about 60°C. The synthesis of 1, 1, 1,4,4,4-hexafluoro-2-iodobutane may be carried out by reaction of perfluoromethyl iodide (CF₃I) and 3,3,3-trifluoropropene (CF₃CH=CH₂) at about 200°C under autogenous pressure for about 8 hours.

1,1,1,2,4,4-hexafluoro-2-butene may be prepared by dehydrofluorination of 1,1,1,2,2,4,4-heptafluorobutane (CHF₂CH₂CF₂CF₃) using solid KOH.

In some embodiments the present compositions comprise HFO-1234yf and HFC-32 in particular weight ratios. Difluoromethane (HFC-32 or R-32) is commercially available or may be made by methods known in the art, such as by dechlorofluorination of methylene chloride. In one embodiment, the HFC-32 component of the inventive composition comprises HFC-32 having a purity of greater than 99 wt.%, greater than 99.5 wt.% pure and in some cases greater than 99.5 to 99.98 weight percent pure. In another particular embodiment, the HFC-32 component comprises greater than 99.99 wt.% pure. In one embodiment, the HFC-32 component further comprises HFC-32 and at least one additional compound selected from the group consisting of HFC-23 (trifluoromethane), HCFC-31 (chlorofluoromethane), HFC-41 (fluoromethane), HFC-143a (1,1,1-trifluoroethane), HCFC-22 (chlorodifluoromethane), CFC-12 (dichlorodifluoromethane), HCC-40 (chloromethane), and HFC-134a (1,1,1,2-tetrafluoroethane).

In some embodiments the compositions of the present invention comprise the oligomer/polymer inhibitor, HFO-1234yf and HFC-32 in particular weight ratios. In certain embodiments compositions comprise from about 20 to about 85 weight percent HFO-1234yf and from about 80 to about 15 weight percent HFC-32 relative to the total amount of HFO-1234yf and HFC-32 in the composition. In certain embodiments the compositions comprise from about 20 to about 40 weight percent HFO-1234yf and from about 60 to about 80 weight percent HFC-32. In other embodiments, the compositions contain from about 30 to about 32 weight percent HFO-1234yf and from about 68 to about 70 weight percent HFC-32. In other embodiments, the compositions comprise from about 77 to about 80 weight percent HFO-1234yf and from about 20 to about 23 weight percent HFC-32.

In particular embodiments the inhibitor containing compositions may contain;
about 31 wt.% HFO-1234yf and about 69 wt.% HFC-32;
about 65 wt.% HFO-1234yf and about 35 wt.% HFC-32; or
about 78.5 wt.% HFO-1234yf and about 21.5 wt.% HFC-32

In a particular embodiment the composition may contain one of:
a. from about 20 to about 40 weight percent HFO-1234yf;
b. from about 28 to about 32 weight percent HFO-1234yf;
c. from about 30 to about 32 weight percent HFO-1234yf;
d. from about 62 to about 65 weight percent HFO-1234yf; and
e. from about 76 to about 80 weight percent HFO-1234yf.

In one embodiment, a stable refrigerant composition is formed by adding up to about 0.5 wt.% of at least one or more C₃-C₄ hydrocarbons and xylenes to a mixture comprising one of:
a. HFO-1234yf and the balance about 14 weight percent HFC-134a;
b. HFO-1234yf and the balance about 25.7 weight percent HFC-134a;
c. from about 55 about 75 weight percent HFO-1234yf and about 25 weight percent to 45 weight percent HFC-134a;
d. from about 56 about 75 weight percent HFO-1234yf and about 25 weight percent to 44 weight percent HFC-134a;
e. HFO-1234yf and the balance about 30 weight percent HFC-125, about 14 weight percent HFC-134a, about 36 weight percent HFC-32 and about 6 weight percent CO₂;
f. HFO-1234yf and the balance from about 28 to about 32 weight percent HFC-32; and
g. HFO-1234yf and the balance about 68 weight percent to 72 weight percent HFC-32.

In one embodiment, the refrigerant is removed from an existing system and upgraded and replaced by transferring a stabilized refrigerant from a pressurized container filled with the stabilized compositions disclosed herein. The container for storing the stabilized composition disclosed herein can be constructed of any suitable material and design that is capable of sealing the compositions therein while maintaining gaseous and liquids phases. Examples of suitable containers comprise pressure resistant containers such as a tank, a filling cylinder, and a secondary filing cylinder. The container can be constructed from any suitable material such as carbon steel, manganese steel, chromium-molybdenum steel, among other low-alloy steels, stainless steel and in some case an aluminum alloy. The container can include a pierce top or valves suitable for dispensing flammable substances.

In some embodiments the present compositions comprise HFO-1234yf and HFC-134a in particular weight ratios. The amount of the HFC-134a can range from about 25 to about 75, about 30 to about 60 and in some cases about 30 to about 50.

Any suitable effective amount of inhibitor may be used in the foregoing compositions comprising at least one fluoroolefin. As described herein, the phrase "effective amount" refers to an amount of inhibitor of the present invention which, when added to a composition comprising at least one fluoroolefin, results in an oligomerize or polymerize to produce as great a reduction in performance, for example, when in use in a cooling apparatus as compared to the composition without an inhibitor. For cooling apparatus, such effective amounts of inhibitor may be determined by way of testing under the conditions of standard test ASHRAE 97-2007 (RA 2017).

In a certain embodiment of the present invention, an effective amount may be said to be that amount of inhibitor that when combined with a composition comprising at least one fluoroolefin and HFC-32 allows a cooling apparatus utilizing said composition comprising at least one fluoroolefin and HFC-32 to perform at the same level of refrigeration performance and cooling capacity as if a composition comprising 1,1,1,2-tetrafluoroethane (R-134a), or other standard refrigerant (R-12, R-22, R-502, R-507A, R-508, R401A, R401B, R402A, R402B, R408, R-410A, R-404A, R407C, R-413A, R-417A, R-422A, R-422B, R-422C, R-422D, R-423, R-114, R-11, R-113, R-123, R-124, R236fa, or R-245fa) depending upon what refrigerant may have been used in a similar system in the past, and were being utilized as the working fluid.

The instant invention employs effective amounts of at least one of the foregoing oligomer/polymer inhibitors. While any suitable effective amount can be employed, effective amounts comprise from about 0.001 weight percent to about 0.5 weight percent, about 0.001 weight percent to about 0.05 weight percent, about 0.001 weight percent to about 0.02 weight percent, about 0.01 weight percent to about 0.5 weight percent, 0.01 weight percent to about 0.4 weight percent, 0.01 weight percent to about 0.3 weight percent, about 0.01 weight percent to about 0.2 weight percent, 0.01 weight percent to about 0.1 weight percent, all ranges and values therebetween, based on the total weight of refrigerant compositions comprising at least the HFO-1234yf and at least one of HFC-32, HFC-125. HFC-134a, and carbon dioxide.

In one embodiment, an effective amount of inhibitor comprises about 10 to about 2,000 ppm by weight, about 10 to about 1,000 ppm and in some cases about 100 to about 1000 ppm, about 100 to 500 ppm, about 100 ppm to about 2000 ppm, and all ranges therebetween of at least one initiator which comprises one of meta-, ortho-, para- xylene and mixtures thereof.

In another embodiment of the invention, the inventive compositions are substantially free of certain conventional inhibitor compounds including phenols, phosphorus-containing compounds, thiophosphates, butylated triphenylphosphorothionates, organo phosphates, or phosphites, sesquiterpene compounds such as at least one member selected from the group consisting of famesol, famesene; ionic liquids such as an ionic liquid comprising an anion selected from the group consisting of [CH₃CO₂]⁻, [HSO₄]⁻, [CH₃OSO₃]⁻, [C₂H₅OSO₃]⁻, [AlCl₄]⁻, [CO₃]²⁻, [HCO₃]⁻, [NO₂]⁻, [NO₃]⁻, [SO₄]²⁻, [PO₄]³⁻, [HPO₄]²⁻, [H₂PO₄]⁻, [HSO₃],and certain fluorinated anion wherein the fluorinated anion is selected from the group consisting of [BF₄]⁻, [PF₆]⁻, [SbF₆]⁻, [CF₃SO₃]⁻, [HCF₂CF₂SO₃]⁻, [CF₃HFCCF₂SO₃]⁻, [HCClFCF₂SO₃]⁻, [(CF₃SO₂)₂N]⁻, [(CF₃CF₂SO₂)₂N]⁻, [(CF₃SO₂)₃C]⁻, [CF₃CO₂]⁻, [CF₃OCFHCF₂SO₃]⁻, [CF₃CF₂OCFHCF₂SO₃]⁻, [CF₃CFHOCF₂CF₂SO₃]⁻, [CF₂HCF₂OCF₂CF₂SO₃]⁻, [CF₂ICF₂OCF₂CF₂SO₃]⁻, [CF₃CF₂OCF₂CF₂SO₃]⁻, [(CF₂HCF₂SO₂)₂N]⁻, [(CF₃CFHCF₂SO₂)₂N]⁻ and mixtures thereof. By substantially free it is meant that the inventive compositions contain less than about 500 ppm, typically less than about 250 ppm, in some cases about 100 ppm and in some cases about 0 ppm of such conventional inhibitors.

In one embodiment, the foregoing stabilized compositions of the present invention may further comprise at least one additional compound selected from fluoroolefins (as described previously herein), hydrofluorocarbons, α ether, ammonia, carbon dioxide (CO₂) and mixtures thereof, meaning mixtures of any of the additional compounds listed in this paragraph. The amount of the additional compound can range from about 1 to about 90% by weight, about 5 to about 75 wt.% and in some cases about 10 to about 50 wt.%.

In certain embodiments used as a replacement for R-410A, said refrigerant mixtures consisting essentially of from about 42 to about 44 weight percent difluoromethane (HFC-32) and about 58 to about 56 weight percent 2,3,3,3-tetrafluoropropene (HFO-1234yf). In one embodiment, the refrigerant mixtures consist essentially of from about 43 to about 44 weight percent HFC-32 and about 57 to about 56 weight percent HFO-1234yf. In another embodiment, the refrigerant mixtures consist essentially of about 44 weight percent HFC-32 and about 56 weight percent HFO-1234yf. In another embodiment, the refrigerant mixtures consist of about 44 weight percent HFC-32 and about 56 weight percent HFO-1234yf.

In one embodiment the present invention is a stabilized HFO-1234yf blend comprising one of propane, cyclopropane, propylene, butane, isobutane, butene, and isobutene, meta-, ortho- or para- xylene, alpha (α)-methyl styrene, 2-methyl-alpha-methylstyrene (α, 2-dimethylstyrene), 3-methyl-alpha-methylstyrene (α, 3-dimethylstyrene) and 4-methyl-alpha-methylstyrene (α, 4- dimethylstyrene) in an amount effective to inhibit oligomerization of HFO-1234yf without affecting performance or compatibility of the stabilized blend, even when combined with refrigerant oils and other conventional additives. The HFO-1234yf content is from about 20 to about 40 weight percent HFO-1234yf; from about 28 to about 32 weight percent HFO-1234yf; from about 30 to about 32 weight percent HFO-1234yf; from about 62 to about 65 weight percent HFO-1234yf; and from about 76 to about 80 weight percent HFO-1234yf.

In another embodiment the present invention is a stabilized HFO-1234yf blend comprising one of propane, cyclopropane, propylene, butane, isobutane, butene, and isobutene, meta-, ortho-, para- xylene, alpha (α)-methyl styrene, 2-methyl-alpha-methylstyrene (α, 2-dimethylstyrene), 3-methyl-alpha-methylstyrene (α, 3-dimethylstyrene), and 4-methyl-alpha-methylstyrene (α, 4- dimethylstyrene) in an amount effective to inhibit oligomerization of HFO-1234yf without affecting performance or compatibility of the stabilized blend, even when combined with refrigerant oils and other conventional additives. The HFO-1234yf and additional HFC content is: from about 55 about 75 weight percent HFO-1234yf and about 25 weight percent to 45 weight percent HFC-134a; from about 56 about 75 weight percent HFO-1234yf and about 25 weight percent to 44 weight percent HFC-134a; about 25.7 weight percent HFC-134a:about 14 weight percent HFC-134a; about 30 weight percent HFC-125, about 14 weight percent HFC-134a, about 36 weight percent HFC-32 and about 6 weight percent CO₂; and, from about 28 to about 32 weight percent HFO-1234yf and about 68 weight percent to 72 weight percent HFC-32.

The HFO-1234yf blends disclosed herein blend include up to 0.5 wt.% of meta-, ortho-, para- xylene and mixtures of two or more.

In another embodiment, the present compositions comprise one of:
a. a refrigerant blend consisting essentially of HFO-1234yf, HFC-32 or HFC-134a;
b. a refrigerant blend consisting essentially of HFO-1234yf and HFC-32; or
c. a refrigerant blend consisting essentially of HFO-1234yf and HFC-134a; and,
at least one inhibitor selected from one of meta-, ortho-, para- xylene and mixtures of two or more.

.In another embodiment, the present compositions comprise:
a. a refrigerant blend consisting essentially of HFO-1234yf, HFC-32, HFC-134a; and
b. at least one inhibitor selected from meta-, ortho- and para- xylene.

In another embodiment, the present compositions comprise:
a. a refrigerant blend consisting essentially of HFO-1234yf, HFC-32, HFC-134a, HFC-125; and carbon dioxide.
b. at least one inhibitor selected from meta-, ortho- and para- xylene.

In one embodiment, the foregoing compositions of the present invention may further comprise at least one lubricant. Lubricants of the present invention comprise those suitable for use with refrigeration or air-conditioning apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21. Lubricants of the present invention may comprise those commonly known as "mineral oils" in the field of compression refrigeration lubrication. Mineral oils comprise paraffins (i.e., straight-chain and branched-carbon-chain, saturated hydrocarbons), naphthenes (i.e., cyclic or ring structure saturated hydrocarbons, which may be paraffins) and aromatics (i.e., unsaturated, cyclic hydrocarbons containing one or more rings characterized by alternating double bonds). Lubricants of the present invention further comprise those commonly known as "synthetic oils" in the field of compression refrigeration lubrication. Synthetic oils comprise alkylaryls (i.e., linear and branched alkyl alkylbenzenes), synthetic paraffins and naphthenes, silicones, and poly-alpha-olefins. Representative conventional lubricants of the present invention are the commercially available BVM 100 N (paraffinic mineral oil sold by BVA Oils), naphthenic mineral oil commercially available under the trademark from Suniso^{®} 3GS and Suniso^{®} 5GS by Crompton Co., naphthenic mineral oil commercially available from Pennzoil under the trademark Sontex^{®} 372LT, naphthenic mineral oil commercially available from Calumet Lubricants under the trademark Calumet^{®} RO-30, linear alkylbenzenes commercially available from Shrieve Chemicals under the trademarks Zerol^{®} 75, Zerol^{®} 150 and Zerol^{®} 500 and branched alkylbenzene, sold by Nippon Oil as HAB 22.

In another embodiment, lubricants of the present invention comprise those which have been designed for use with hydrofluorocarbon refrigerants and are miscible with refrigerants of the present invention under compression refrigeration and air-conditioning apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol^{®} 100 (Castrol, United Kingdom), as well as commercially available POE32-3MAF, and ND-11; and polyalkylene glycols (PAGs) such as RL-488A from Dow (Dow Chemical, Midland, Michigan) and commercially available ND-12; and polyvinyl ethers (PVEs).

In one embodiment, the compositions comprise lubricants selected from the group consisting of polyol esters (POE), polyalkylene glycols (PAG), and polyvinyl ethers (PVE).

Lubricants of the present invention are selected by considering a given compressor's requirements and the environment to which the lubricant will be exposed. The amount of lubricant can range from about 1 to about 50 wt.%, about 1 to about 20 wt.%, about 1 to about 10 wt.%, about 1 to about 5 wt.%, and in some cases about 1 to about 3 wt.%. In one particular embodiment, the foregoing compositions are combined with a PAG lubricant for usage in an automotive air conditioning system having an internal combustion engine. In another particular embodiment, the foregoing compositions are combined with a POE lubricant for usage in an automotive air conditioning or heat pump system having an electric or hybrid electric drive train.

In one embodiment of the invention, in addition to the inventive inhibitor, the composition can comprise at least one additive which can improve the refrigerant and air-conditioning system lifetime and compressor durability are desirable. In one aspect of the invention, the foregoing compositions comprise at least one of acid scavengers, performance enhancers, and flame suppressants.

Additives which can improve the refrigerant and A/C lifetime and compressor durability are desirable. In one aspect of the invention, the inventive refrigerant containing composition is used to introduce lubricant into the A/C system as well as other additives, such as a) acid scavengers, b) performance enhancers, and c) flame suppressants.

An acid scavenger may comprise a siloxane, an activated aromatic compound, or a combination of both. Serrano et al (paragraph 38 of US 2011/0272624 A1) discloses that the siloxane may be any molecule having a siloxy functionality. The siloxane may include an alkyl siloxane, an aryl siloxane, or a siloxane containing mixtures of aryl and alkyl substituents. For example, the siloxane may be an alkyl siloxane, including a dialkylsiloxane or a polydialkylsiloxane. Preferred siloxanes include an oxygen atom bonded to two silicon atoms, i.e., a group having the structure: SiOSi. For example, the siloxane may be a siloxane of Formula IV: R¹[Si(R²R³)₄O]nSi(R²R³)R⁴, where n is 1 or more. Siloxanes of Formula IV have n that is preferably 2 or more, more preferably 3 or more, (e.g., about 4 or more). Siloxanes of formula IV have n that is preferably about 30 or less, more preferably about 12 or less, and most preferably about 7 or less. Preferably the R⁴ group is an aryl group or an alkyl group. Preferably the R² groups are aryl groups or alkyl groups or mixtures thereof. Preferably the R³ groups are aryl groups or alkyl groups or mixtures thereof. Preferably the R⁴ group is an aryl group or an alkyl group. Preferably R¹, R², R³, R⁴, or any combination thereof are not hydrogen. The R² groups in a molecule may be the same or different. Preferably the R² groups in a molecule are the same. The R² groups in a molecule may be the same or different from the R³ groups. Preferably, the R² groups and R³ groups in a molecule are the same. Preferred siloxanes include siloxanes of Formula IV, wherein R1, R², R³, R⁴, R⁵, or any combination thereof is a methyl, ethyl, propyl, or butyl group, or any combination thereof. Exemplary siloxanes that may be used include hexamethyldisiloxane, polydimethylsiloxane, polymethylphenylsiloxane, dodecamethylpentasiloxane, decamethylcyclo-pentasiloxane, decamethyltetrasiloxane, octamethyltrisiloxane, or any combination thereof.

In one aspect of the invention, the siloxane is an alkylsiloxane containing from about 1 to about 12 carbon atoms, such as hexamethyldisiloxane. The siloxane may also be a polymer such as polydialkylsiloxane, where the alkyl group is a methyl, ethyl, propyl, butyl, or any combination thereof. Suitable polydialkylsiloxanes have a molecular weight from about 100 to about 10,000. Highly preferred siloxanes include hexamethyldisiloxane, polydimethylsiloxane, and combinations thereof. The siloxane may consist essentially of polydimethylsiloxane, hexamethyldisiloxane, or a combination thereof.

The activated aromatic compound may be any aromatic molecule activated towards a Friedel-Crafts addition reaction, or mixtures thereof. An aromatic molecule activated towards a Friedel-Crafts addition reaction is defined to be any aromatic molecule capable of an addition reaction with mineral acids. Especially aromatic molecules capable of addition reactions with mineral acids either in the application environment (AC system) or during the ASHRAE 97: 2007 "Sealed Glass Tube Method to Test the Chemical Stability of Materials for Use within Refrigerant Systems" thermal stability test. Such molecules or compounds are typically activated by substitution of a hydrogen atoms of the aromatic ring with one of the following groups: -NH₂, -NHR, - NR₂, -OH, -O-, -NHCOCH₃, -NHCOR, -OCH₃, -OR, -CH₃, -C₂H₅, -R, or -C₆H₅, where R is a hydrocarbon (preferably a hydrocarbon containing from about 1 to about 100 carbon atoms). The activated aromatic molecule may be an alcohol, or an ether, where the oxygen atom (i.e., the oxygen atom of the alcohol or ether group) is bonded directly to an aromatic group. The activated aromatic molecule may be an amine where the nitrogen atom (i.e., the nitrogen atom of the amine group) is bonded directly to an aromatic group. By way of example, the activated aromatic molecule may have the formula ArXRₙ, where X is O (i.e., oxygen) or N (i.e., nitrogen); n=1 when X=O; n=2 when x=N; Ar is an aromatic group (i.e., group, C₆H₅); R may be H or a carbon containing group; and when n=2, the R groups may be the same or different. For example, R may be H (i.e., hydrogen), Ar, an alkyl group, or any combination thereof. Exemplary activated aromatic molecules that may be employed in a refrigerant composition according to the teachings herein include diphenyl oxide (i.e., diphenyl ether), methyl phenyl ether (e.g., anisole), ethyl phenyl ether, butyl phenyl ether or any combination thereof. One highly preferred aromatic molecule activated towards a Friedel-Crafts addition reaction is diphenyl oxide.

The acid scavenger (e.g., the activated aromatic compound, the siloxane, or both) may be present in any concentration that results in a relatively low total acid number, a relatively low total halides concentration, a relatively low total organic acid concentration, or any combination thereof. Preferably the acid scavenger is present at a concentration greater than about 0.0050 wt.%, more preferably greater than about 0.05 wt.% and even more preferably greater than about 0.1 wt.% (e.g., greater than about 0.5 wt.%) based on the total weight of the refrigerant composition. The acid scavenger preferably is present in a concentration less than about 3 wt.%, more preferably less than about 2.5 wt.% and most preferably greater than about 2 wt.% (e. g. less than about 1.8 wt.%) based on the total Weight of the refrigerant composition.

Additional examples of acid scavengers which may be included in the refrigerant composition include those described by Kaneko (US. patent application Ser. No. 11/575,256, published as U.S. Patent Publication 2007/0290164, paragraph 42) such as one or more of: phenyl glycidyl ethers, alkyl glycidyl ethers, alkyleneglycolglycidylethers, cyclohexeneoxides, otolenoxides, or epoxy compounds such as epoxidized soybean oil, and those described by Singh et al. (US. patent application Ser. No. 11/250,219, published as US20060116310, paragraphs 34-42).

Preferred antiwear additives include those described in US. Pat. Nos. 5,152,926; 4,755,316. In particular, the preferred extreme pressure additives include mixtures of (A) tolyltriazole or substituted derivatives thereof, (B) an amine (e.g. Jeffamine M-600) and (C) a third component which is (i) an ethoxylated phosphate ester (e.g. Antara LP-700 type), or (ii) a phosphate alcohol (e.g. ZELEC 3337 type), or (iii) a Zinc dialkyldithiophosphate (e.g. Lubrizol 5139, 5604, 5178, or 5186 type), or (iv) a mercaptobenzothiazole, or (v) a 2,5-dimercapto-1,3,4-triadiazole derivative (e. g. Curvan 826) or a mixture thereof. Additional examples of additives which may be used are given in US. Pat. No. 5,976,399 (Schnur, 5:12-6:51).

Acid number is measured according to ASTM D664-01 in units of mg KOH/g. The total halides concentration, the fluorine ion concentration, and the total organic acid concentration is measured by ion chromatography. Chemical stability of the refrigerant system is measured according to ASHRAE 97: 2007 (RA 2017) "Sealed Glass Tube Method to Test the Chemical Stability of Materials for Use within Refrigerant Systems". The viscosity of the lubricant is tested at 40°C according to ASTM D-7042.

Mouli et al. (WO 2008/027595 and WO 2009/042847) teach the use of alkyl silanes as a stabilizer in refrigerant compositions containing fluoroolefins. Phosphates, phosphites, epoxides, and phenolic additives also have been employed in certain refrigerant compositions. These are described for example by Kaneko (U.S. patent application Ser. No. 11/575,256, published as U.S. Publication 2007/0290164) and Singh et al. (U.S. patent application Ser. No. 11/250,219, published as U.S. Publication 2006/0116310).

Preferred flame suppressants include those described in patent application "Compositions containing fluorine substituted olefins CA 2557873 A1" and along with fluorinated products such as HFC-125 and/or Krytox^{®} lubricants, described in patent application "Compositions comprising fluoroolefins and uses thereof WO2009018117A1."

The compositions of the present invention may be prepared by any convenient method to combine the desired amount of the individual components. A preferred method is to weigh the desired component amounts and thereafter combine the components in an appropriate vessel. Agitation may be used, if desired.

The present invention further relates to a process for producing cooling comprising condensing a composition comprising at least HFO-1234yf and at least one of HFC-32, HFC-134a, HFC-125, and carbon dioxide mixture or blend, and an effective amount of inhibitor comprising at least propane, cyclopropane, propylene, butane, isobutane, butene and isobutene, meta-, ortho- para- xylene, alpha (α)-methyl styrene, 2-methyl-alpha-methylstyrene (α, 2-dimethylstyrene), 3-methyl-alpha-methylstyrene (α, 3-dimethylstyrene), and 4-methyl-alpha-methylstyrene (α, 4- dimethylstyrene), and mixtures of two or more, and thereafter evaporating said composition in the vicinity of a body to be cooled.

A body to be cooled may be any space, location or object requiring refrigeration or air-conditioning. In stationary applications the body may be the interior of a structure, i.e., residential, or commercial, or a storage location for perishables, such as food or pharmaceuticals. For mobile refrigeration applications the body may be incorporated into a transportation unit for the road, rail, sea, or air. Certain refrigeration systems operate independently with regards to any moving carrier, these are known as "intermodal" systems. Such intermodal systems include "containers" (combined sea/land transport) as well as "swap bodies" (combined road and rail transport).

The present invention further relates to a process for producing heat comprising condensing a composition comprising at least one fluoroolefin, and HFC-32 and or HFC-134a and an effective amount of an inhibitor comprising at least one of meta-, ortho- para- xylene in the vicinity of a body to be heated, and thereafter evaporating said composition.

A body to be heated may be any space, location or object requiring heat. These may be the interior of structures either residential or commercial in a similar manner to the body to be cooled. Additionally, mobile units as described for cooling may be similar to those requiring heating. Certain transport units require heating to prevent the material being transported from solidifying inside the transport container.

Another embodiment of the invention relates to an air-conditioning, refrigeration, heat pump, or chiller apparatus comprising at least one evaporator, at least one compressor, at least one condenser and at least one expansion device characterized as containing the foregoing compositions.

Another embodiment of the invention relates to storing the foregoing compositions in gaseous and/or liquid phases within a sealed container wherein the oxygen and/or water concentration in the gas and/or liquid phases ranges from about 3 vol ppm to less than about 3,000 vol ppm at a temperature of about 25°C, about 5 vol ppm to less than about 1,000 vol ppm and in some cases about 5 vol ppm to less than about 500 vol ppm, and all values therebetween.

The container for storing the foregoing compositions can be constructed of any suitable material and design that is capable of sealing the compositions therein while maintaining gaseous and liquids phases. Examples of suitable containers comprise pressure resistant containers such as a tank, a filling cylinder, and a secondary filling cylinder. The container can be constructed from any suitable material such as carbon steel, manganese steel, chromium-molybdenum steel, among other low-alloy steels, stainless steel and in some cases an aluminum alloy. The container can include a pierce top or valves suitable for dispensing flammable substances.

While any suitable method can be employed for stabilizing fluorocarbon containing compositions, examples of such methods including blending the foregoing inhibitors with the foregoing fluoroolefin composition, purging lines and containers with a material comprising the inhibitor (e.g., an inhibitor with a nitrogen carrier, or the inventive stabilized composition); among other suitable methods.

The following examples are provided to illustrate certain embodiments of the invention and shall not limit the scope of the appended claims.

### EXAMPLES

The present disclosure is further defined in the following Examples. It should be understood that these Examples, while indicating preferred embodiments, are given by way of illustration only. From the above discussion and these Examples, one skilled in the art can ascertain the preferred features, and without departing from the spirit and scope thereof, can make various changes and modifications to adapt it to various uses and conditions

### Example 1

30 g of HFO-1234yf* having at least 99.5 wt.% purity and initiator (with and without inhibitor) was heated in a 210 mL shake tube at the temperature and for the period of time given in Table 3. The shake tube is visually inspected for polymer formation as well as by using IR in accordance with conventional methods by detecting yf polymer peaks. Polymer can also be detected by using conventional NMR methods.
*The HFO-1234yf comprised 99.7 wt.% HFO-1234yf, 1,000 ppm HFO-1234ze, 50 ppm HFO-1225yeZ, 20 ppm 1243zf, 3 ppm trifluoropropyne with the remainder comprising compounds that do not affect the refrigerant performance of the mixture.

**TABLE 2**

| **Example** | **Inhibitor** | **Concen. (ppm)** | **Initiator Air (ppm)** | **Time (weeks)** | **T (°C)** | **Polymer (wt.%)** |
|---|---|---|---|---|---|---|
| Control-1 | | None | 3,300 | 2 | 75 | 0.003 |
| 1 | meta-xylene | 500 | 3,300 | 2 | 75 | N/D |
| 2 | alpha-methylstyrene* | 500 | 3,300 | 2 | 75 | N/D |
| 3 | alpha meta-methylstyrene* | 500 | 3,300 | 2 | 75 | N/D |
| Control-2 | | None | 10,000 | 2 | 100 | 2.8 |
| 4 | meta-xylene | 1000 | 10,000 | 2 | 100 | <1 |
| 5 | alpha-methylstyrene* | 1000 | 10,000 | 2 | 100 | <1 |
| 6 | alpha meta-methylstyrene* | 1000 | 10,000 | 2 | 100 | <1 |

| | | | | | | |
|---|---|---|---|---|---|---|
| *Reference example | | | | | | |

### Example 2

30 g of HFO-1234yf having at least 99.5 wt.% purity, with and without inhibitor, was heated in a 210 mL shake tube at the temperature and for the period of time given in Table 3. 3 wt.% lubricant is included when the inhibitor is present. The shake tube is visually inspected for polymer formation as well as by using IR in accordance with conventional methods by detecting yf polymer peaks. Polymer can also be detected by using conventional NMR methods.

**TABLE 3**

| **Example** | **Inhibitor** | **Concen. (ppm)** | **Lubricant** | **Initiator Air (ppm)** | **Time (weeks)** | **T (°C)** | **Polymer (wt.%)** |
|---|---|---|---|---|---|---|---|
| Control | None | - | - | 10,000 | 2 | 100 | 2.8 |
| 1 | meta-xylene | 500 | POE32-3MAF | 10,000 | 2 | 100 | N/D |
| 2 | alpha-methylstyrene* | 500 | POE32-3MAF | 10,000 | 2 | 100 | N/D |
| 3 | meta-xylene | 500 | ND-11 | 10,000 | 2 | 100 | N/D |
| 4 | alpha-methylstyrene* | 500 | ND-11 | 10,000 | 2 | 100 | N/D |
| 5 | meta-xylene | 500 | ND-12 | 10,000 | 2 | 100 | N/D |
| 6 | alpha-methylstyrene* | 500 | ND-12 | 10,000 | 2 | 100 | N/D |

| | | | | | | | |
|---|---|---|---|---|---|---|---|
| *Reference example | | | | | | | |

### Examples 3-6

A refrigerant blend comprising a mixture of HFO-1234yf (30g having the composition of Example 1, at least one additional compound and an initiator (and without inhibitor) is heated in a 210mL shake tube at the temperature and for the period of time given in Table 4-7. 3 wt.% lubricant is included when the inhibitor is present.

Example 3 Runs 1-6 evaluate an inhibitor with Opteon^{™} XP-10 refrigerant (R513a) and a commercially available lubricant. XP10 refrigerant comprises 56 wt.% HFO-1234yf and 44 wt.% HFC-134a.

Example 4 Runs 7-12 evaluate an inhibitor with Opteon^{™} XP-40 refrigerant (R449a) and a commercially available lubricant. XP40 refrigerant comprises 24.3 wt.% R32, 24.7wt % R125, 25.3 wt.% 1234yf, and 25.7 wt.% 134a. 3 wt.% lubricant is included when the inhibitor is present.

Example 5 Runs 13-19 evaluate an inhibitor with Opteon^{™} XL-20 refrigerant (454C) and a commercially available lubricant. XL20 comprises 21.5 % HFC-32 and 78.5 % HFO-1234yf. 3 wt.% lubricant is included when the inhibitor is present.

Example 6 Runs 20-26 evaluate an inhibitor with Opteon^{™} XP-41 refrigerant 463A) and a commercially available lubricant. XL41 comprises 30 % HFC-125, 14 % HFC-134a, 36% HFC-32, 14% HFO-1234yf and 6 % CO₂. 3 wt.% lubricant is included when the inhibitor is present.

**TABLE 4**

| **Examples** | **Refrigerant blends** | **Inhibitor** | **Concen. (ppm)** | **Lubricant** | **Initiator (Air) (ppm)** | **Time (Wks.)** | **T (°C)** | **polymer (wt.%)** |
|---|---|---|---|---|---|---|---|---|
| Control | R-513A | None | | | 2000 | 2 | 135 | 0.003 |
| 1 | R-513A | meta-xylene | 500 | POE32-3MAF | 2000 | 2 | 135 | N/D |
| 2 | R-513A | alpha-methylstyrene* | 500 | POE32-3MAF | 2000 | 2 | 135 | N/D |
| 3 | R-513A | meta-xylene | 500 | ND-11 | 2000 | 2 | 135 | N/D |
| 4 | R-513A | alpha-methylstyrene* | 500 | ND-11 | 2000 | 2 | 135 | N/D |
| 5 | R-513A | meta-xylene | 500 | ND-12 | 2000 | 2 | 135 | N/D |
| 6 | R-513A | alpha-methylstyrene* | 500 | ND-12 | 2000 | 2 | 135 | N/D |

| | | | | | | | | |
|---|---|---|---|---|---|---|---|---|
| *Reference example | | | | | | | | |

**TABLE 5**

| **Examples** | **Refrigerant blends** | **Inhibitor** | **Concen. (ppm)** | **Lubricant** | **Initiator (Air) (ppm)** | **Time (Wks.)** | **T (°C)** | **polymer (wt.%)** |
|---|---|---|---|---|---|---|---|---|
| Control | R-449A | None | | | 1000 | 2 | 135 | 0.003 |
| 7 | R-449A | meta-xylene | 500 | POE32-3MAF | 1000 | 2 | 135 | N/D |
| 8 | R-449A | alpha-methylstyrene* | 500 | POE32-3MAF | 1000 | 2 | 135 | N/D |
| 9 | R-449A | meta-xylene | 500 | ND-11 | 1000 | 2 | 135 | N/D |
| 10 | R-449A | alpha-methylstyrene* | 500 | ND-11 | 1000 | 2 | 135 | N/D |
| 11 | R-449A | meta-xylene | 500 | ND-12 | 1000 | 2 | 135 | N/D |
| 12 | R-449A | alpha-methylstyrene* | 500 | ND-12 | 1000 | 2 | 135 | N/D |

| | | | | | | | | |
|---|---|---|---|---|---|---|---|---|
| *Reference example | | | | | | | | |

**TABLE 6**

| **Examples** | **refrigerant blends** | **Inhibitor** | **Concen. (ppm)** | **Lubricant** | **(Air) (ppm)** | **Time (Wks.)** | **T (°C)** | **polymer (wt.%)** |
|---|---|---|---|---|---|---|---|---|
| Control | R-454C | None | | None | 3300 | 2 | 135 | 0.003 |
| 13 | R-454C | meta-xylene | 500 | | 3300 | 2 | 135 | N/D |
| 14 | R-454C | meta-xylene | 500 | POE32-3MAF | 3300 | 2 | 135 | N/D |
| 15 | R-454C | alpha-methylstyrene * | 500 | POE32-3MAF | 3300 | 2 | 135 | N/D |
| 16 | R-454C | meta-xylene | 500 | ND-11 | 3300 | 2 | 135 | N/D |
| 17 | R-454C | alpha-methylstyrene * | 500 | ND-11 | 3300 | 2 | 135 | N/D |
| 18 | R-454C | meta-xylene | 500 | ND-12 | 3300 | 2 | 135 | N/D |
| 19 | R-454C | alpha-methylstyrene * | 500 | ND-12 | 3300 | 2 | 135 | N/D |

| | | | | | | | | |
|---|---|---|---|---|---|---|---|---|
| *Reference example | | | | | | | | |

**TABLE 7**

| **Examples** | **refrigerant blends** | **Inhibitor** | **Concen. (ppm)** | **Lubricant** | **(Air) (ppm)** | **Time (Wks.)** | **T (°C)** | **polymer (wt.%)** |
|---|---|---|---|---|---|---|---|---|
| Control | R-463A | None | | | 1000 | 2 | 135 | 0.003 |
| 20 | R-463A | meta-xylene | 500 | | 1000 | 2 | 135 | N/D |
| 21 | R-463A | meta-xylene | 500 | POE32-3MAF | 1000 | 2 | 135 | N/D |
| 22 | R-463A | alpha-methylstyrene * | 500 | POE32-3MAF | 1000 | 2 | 135 | N/D |
| 23 | R-463A | meta-xylene | 500 | ND-11 | 1000 | 2 | 135 | N/D |
| 24 | R-463A | alpha-methylstyrene * | 500 | ND-11 | 1000 | 2 | 135 | N/D |
| 25 | R-463A | meta-xylene | 500 | ND-12 | 1000 | 2 | 135 | N/D |
| 26 | R-463A | alpha-methylstyrene * | 500 | ND-12 | 1000 | 2 | 135 | N/D |

| | | | | | | | | |
|---|---|---|---|---|---|---|---|---|
| *Reference example | | | | | | | | |

POE32-3MAF and ND-11 are commercially available POE lubricants. ND-12 is a commercially available PAG lubricant. After heating, the shake tubes are visually inspected for polymer formation as well as being analyzed by NMR. N/D indicates that no polymer was found.

### Cooling and Heating Performance Data Comparison of HFO-1234yf and Blends

The cooling and heating performance for mixtures include xylene and C₃ and C₄ hydrocarbons oligomer inhibitors, HFO1234yf alone and in commercially available Opteon^{®} XL20, XL40 and XL41 blends was determined and are compared to one another in Tables 9-15 below (Table 13 to 15 according to the invention, tables 9 to 14 with reference examples). Measurements included: pressure in the evaporator (Evap) and condenser (Cond), compressor discharge temperature (Disch T) and Average Temperature Glide for the evaporator and condenser (Avg Temp Glide). Relative energy efficiency (COP) and volumetric capacity (Cap). The data was based on the following conditions:

| **AC Cooling Conditions** | |
|---|---|
| Evaporator temperature | 4°C |
| Condenser temperature | 40°C |
| Subcool amount | 0°K |
| Superheat Temperature | 15°K |
| Compressor efficiency | 70% |

**TABLE 8**

| **Composition (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |
| | | | | | | | | |

| **1234yf/propane** | | | | | | | | |
|---|---|---|---|---|---|---|---|---|
| 99.9/0.1 | 362 | 1021 | 59.2 | 0.1 | 2336 | 100.2 | 4.353 | 100.0 |
| 99.8/0.2 | 363 | 1024 | 59.2 | 0.1 | 2342 | 100.5 | 4.351 | 99.9 |
| 99.7/0.3 | 364 | 1027 | 59.3 | 0.2 | 2348 | 100.7 | 4.350 | 99.9 |
| 99.6/0.4 | 365 | 1030 | 59.4 | 0.2 | 2353 | 100.9 | 4.348 | 99.9 |
| 99.5/0.5 | 366 | 1033 | 59.4 | 0.3 | 2359 | 101.2 | 4.347 | 99.8 |
| 99.4/0.6 | 367 | 1035 | 59.5 | 0.4 | 2365 | 101.5 | 4.345 | 99.8 |
| 99.3/0.7 | 368 | 1038 | 59.5 | 0.4 | 2370 | 101.7 | 4.344 | 99.8 |
| 99.2/0.8 | 369 | 1041 | 59.6 | 0.5 | 2376 | 101.9 | 4.343 | 99.7 |
| 99.1/0.9 | 370 | 1044 | 59.6 | 0.5 | 2382 | 102.2 | 4.341 | 99.7 |
| 99/1 | 371 | 1047 | 59.7 | 0.6 | 2387 | 102.4 | 4.340 | 99.7 |
| 98.9/1.1 | 372 | 1049 | 59.7 | 0.6 | 2393 | 102.7 | 4.339 | 99.7 |
| 98/2 | 381 | 1073 | 60.2 | 1.1 | 2441 | 104.7 | 4.328 | 99.4 |
| 97/3 | 390 | 1099 | 60.6 | 1.5 | 2493 | 106.9 | 4.319 | 99.2 |
| 96/4 | 399 | 1123 | 61.0 | 1.9 | 2543 | 109.1 | 4.310 | 99.0 |
| 95/5 | 409 | 1145 | 61.3 | 2.2 | 2590 | 111.1 | 4.303 | 98.8 |

| **XL41 and 32/1234yf/propane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0% |
| 68.85/31.05/0.1 | 843 | 2264 | 87.2 | 1.2 | 5249 | 100.1 | 4.181 | 100.0% |
| 68.75/30.95/0.3 | 846 | 2271 | 87.2 | 1.3 | 5260 | 100.3 | 4.177 | 99.9% |
| 68.65/30.85/0.5 | 849 | 2271 | 87.2 | 1.4 | 5271 | 100.5 | 4.174 | 99.8% |
| 68.4/30.6/1 | 856 | 2296 | 87.1 | 1.5 | 5297 | 101.0 | 4.165 | 99.6% |
| 67.4/29.6/3 | 884 | 2360 | 86.8 | 2.1 | 5394 | 102.9 | 4.132 | 98.8% |
| 66.4/28.6/5 | 910 | 2419 | 86.4 | 2.5 | 5478 | 104.5 | 4.103 | 98.1% |

| **XL40 and 32/1234yf/propane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0% |
| 34.95/64.95/0.1 | 671 | 1843 | 76.6 | 4.8 | 4181 | 100.1 | 4.211 | 100.0% |
| 34.85/64.85/0.3 | 673 | 1848 | 76.6 | 4.9 | 4190 | 100.3 | 4.207 | 99.9% |
| 34.75/64.75/0.5 | 675 | 1854 | 76.6 | 5.0 | 4198 | 100.5 | 4.204 | 99.8% |
| 34.5/64.5/1 | 680 | 1867 | 76.6 | 5.1 | 4219 | 101.0 | 4.196 | 99.6% |
| 33.5/63.5/3 | 700 | 1914 | 76.6 | 5.7 | 4292 | 102.8 | 4.169 | 99.0% |
| 32.5/62.5/5 | 718 | 1955 | 76.6 | 6.1 | 4353 | 104.2 | 4.145 | 98.4% |

| **XL20 and 32/1234yf/propane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0% |
| 21.45/78.45/0.1 | 569 | 1592 | 72.1 | 6.3 | 3615 | 100.1 | 4.260 | 100.0% |
| 21.35/78.35/0.3 | 571 | 1597 | 72.1 | 6.4 | 3623 | 100.3 | 4.257 | 99.9% |
| 21.25/78.25/0.5 | 572 | 1601 | 72.2 | 6.5 | 3630 | 100.5 | 4.254 | 99.8% |
| 21/78/1 | 576 | 1612 | 72.2 | 6.5 | 3647 | 101.0 | 4.248 | 99.7% |
| 20/77/3 | 592 | 1649 | 72.3 | 7.2 | 3708 | 102.7 | 4.225 | 99.2% |
| 19/76/5 | 605 | 1680 | 72.3 | 7.5 | 3758 | 104.0 | 4.206 | 98.7% |

**TABLE 9**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |

| **1234yf/propylene** | | | | | | | | |
|---|---|---|---|---|---|---|---|---|
| 99.9/0.1 | 362 | 1021 | 59.2 | 0.1 | 2337 | 100.3 | 4.353 | 100.0 |
| 99.7/0.3 | 364 | 1027 | 59.3 | 0.2 | 2349 | 100.8 | 4.350 | 99.9 |
| 99.5/0.5 | 366 | 1033 | 59.5 | 0.3 | 2360 | 101.2 | 4.348 | 99.9 |
| 99/1 | 371 | 1047 | 59.8 | 0.6 | 2390 | 102.5 | 4.342 | 99.7 |
| 97/3 | 391 | 1100 | 60.9 | 1.5 | 2502 | 107.3 | 4.324 | 99.3 |
| 95/5 | 410 | 1149 | 61.8 | 2.3 | 2607 | 111.8 | 4.311 | 99.0 |

| **XL41 and 32/1234yf/propylene (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.85/31.05/0.1 | 843 | 2263 | 87.2 | 1.2 | 5248 | 100.1 | 4.182 | 100.0 |
| 68.75/30.95/0.3 | 845 | 2269 | 87.2 | 1.3 | 5257 | 100.3 | 4.179 | 99.9 |
| 68.65/30.85/0.5 | 847 | 2274 | 87.2 | 1.3 | 5265 | 100.4 | 4.177 | 99.9 |
| 68.4/30.6/1 | 853 | 2287 | 87.2 | 1.4 | 5286 | 100.8 | 4.171 | 99.7 |
| 67.4/29.6/3 | 875 | 2336 | 86.9 | 1.7 | 5364 | 102.3 | 4.148 | 99.2 |
| 66.4/28.6/5 | 896 | 2381 | 86.6 | 1.9 | 5433 | 103.6 | 4.128 | 98.7 |

| **XL40 and 32/1234yf/propylene (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0 |
| 34.95/64.95/0.1 | 671 | 1842 | 76.6 | 4.8 | 4181 | 100.1 | 4.211 | 100.0 |
| 34.85/64.85/0.3 | 673 | 1847 | 76.6 | 4.8 | 4188 | 100.3 | 4.209 | 99.9 |
| 34.75/64.75/0.5 | 674 | 1851 | 76.6 | 4.9 | 4195 | 100.4 | 4.207 | 99.9 |
| 34.5/64.5/1 | 679 | 1861 | 76.6 | 5.0 | 4212 | 100.8 | 4.202 | 99.8 |
| 33.5/63.5/3 | 695 | 1898 | 76.7 | 5.4 | 4283 | 102.5 | 4.183 | 99.3 |
| 32.5/62.5/5 | 709 | 1929 | 76.7 | 5.7 | 4325 | 103.5 | 4.167 | 98.9 |

| **XL20 and 32/1234yf/propylene (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0 |
| 21.45/78.45/0.1 | 569 | 1592 | 72.1 | 6.3 | 3615 | 100.1 | 4.260 | 100.0 |
| 21.35/78.35/0.3 | 570 | 1595 | 72.1 | 6.3 | 3621 | 100.2 | 4.258 | 99.9 |
| 21.25/78.25/0.5 | 572 | 1599 | 72.2 | 6.4 | 3627 | 100.4 | 4.256 | 99.9 |
| 21/78/1 | 575 | 1607 | 72.2 | 6.5 | 3642 | 100.8 | 4.252 | 99.8 |
| 20/77/3 | 588 | 1638 | 72.4 | 6.9 | 3696 | 102.3 | 4.236 | 99.4 |
| 19/76/5 | 600 | 1663 | 72.5 | 7.1 | 3741 | 103.6 | 4.223 | 99.1 |

**TABLE 10**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |
| | | | | | | | | |

| **1234yf/isobutane** | | | | | | | | |
|---|---|---|---|---|---|---|---|---|
| 99.9/0.1 | 361 | 1018 | 59.1 | 0 | 2331 | 100.0 | 4.354 | 100.0 |
| 99.7/0.3 | 361 | 1019 | 59.1 | 0 | 2332 | 100.0 | 4.353 | 100.0 |
| 99.5/0.5 | 362 | 1020 | 59.1 | 0 | 2334 | 100.1 | 4.353 | 100.0 |
| 99/1 | 363 | 1021 | 59.1 | 0 | 2336 | 100.2 | 4.352 | 100.0 |
| 97/3 | 365 | 1026 | 59.1 | 0 | 2344 | 100.6 | 4.349 | 99.9 |
| 95/5 | 367 | 1028 | 59.0 | 0 | 2348 | 100.7 | 4.348 | 99.9 |

| **XL41 and 32/1234yflisobutane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.85/31.05/0.1 | 842 | 2261 | 87.2 | 1.2 | 5243 | 100.0 | 4.182 | 100.0 |
| 68.75/30.95/0.3 | 842 | 2261 | 87.1 | 1.2 | 5241 | 100.0 | 4.181 | 100.0 |
| 68.65/30.85/0.5 | 843 | 2262 | 87.0 | 1.2 | 5240 | 99.9 | 4.180 | 99.9 |
| 68.4/30.6/1 | 844 | 2263 | 86.7 | 1.2 | 5235 | 99.8 | 4.178 | 99.9 |
| 67.4/29.6/3 | 847 | 2265 | 85.8 | 1.3 | 5216 | 99.5 | 4.168 | 99.6 |
| 66.4/28.6/5 | 850 | 2264 | 84.8 | 1.3 | 5192 | 99.0 | 4.159 | 99.4 |

| **XL40 and 32/1234yflisobutane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0 |
| 34.95/64.95/0.1 | 670 | 1840 | 76.5 | 4.8 | 4176 | 100.0 | 4.212 | 100.0 |
| 34.85/64.85/0.3 | 670 | 1839 | 76.5 | 4.8 | 4172 | 99.9 | 4.211 | 100.0 |
| 34.75/64.75/0.5 | 670 | 1838 | 76.4 | 4.8 | 4169 | 99.8 | 4.211 | 100.0 |
| 34.5/64.5/1 | 669 | 1836 | 76.3 | 4.9 | 4161 | 99.6 | 4.209 | 99.9 |
| 33.5/63.5/3 | 666 | 1825 | 75.7 | 5.1 | 4124 | 98.7 | 4.205 | 99.8 |
| 32.5/62.5/5 | 662 | 1810 | 75.2 | 5.4 | 4084 | 97.8 | 4.203 | 99.8 |

| **XL20 and 32/1234yflisobutane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0 |
| 21.45/78.45/0.1 | 568 | 1589 | 72.1 | 6.3 | 3610 | 99.9 | 4.261 | 100.0 |
| 21.35/78.35/0.3 | 568 | 1588 | 72.0 | 6.3 | 3606 | 99.8 | 4.261 | 100.0 |
| 21.25/78.25/0.5 | 567 | 1587 | 72.0 | 6.3 | 3602 | 99.7 | 4.260 | 100.0 |
| 21/78/1 | 566 | 1583 | 71.8 | 6.3 | 3592 | 99.4 | 4.260 | 100.0 |
| 20/77/3 | 560 | 1566 | 71.3 | 6.5 | 3548 | 98.2 | 4.260 | 100.0 |
| 19/76/5 | 554 | 1546 | 70.8 | 6.6 | 3500 | 96.9 | 4.260 | 100.0 |

**TABLE 11**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |
| | | | | | | | | |

| **1234yf/n-butane** | | | | | | | | |
|---|---|---|---|---|---|---|---|---|
| 99.9/0.1 | 361 | 1018 | 59.1 | 0 | 2330 | 100.0 | 4.354 | 100.0 |
| 99.7/0.3 | 361 | 1018 | 59.1 | 0 | 2330 | 100.0 | 4.354 | 100.0 |
| 99.5/0.5 | 361 | 1018 | 59.1 | 0 | 2329 | 99.9 | 4.355 | 100.0 |
| 99/1 | 361 | 1017 | 59.1 | 0 | 2327 | 99.8 | 4.355 | 100.0 |
| 97/3 | 359 | 1011 | 59.1 | 0 | 2317 | 99.4 | 4.359 | 100.1 |
| 95/5 | 356 | 1003 | 59.1 | 0.1 | 2302 | 98.8 | 4.364 | 100.2 |

| **XL41 and 32/1234yf/n-butane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.85/31.05/0.1 | 841 | 2260 | 87.2 | 1.2 | 5242 | 100.0 | 4.183 | 100.0 |
| 68.75/30.95/0.3 | 841 | 2259 | 87.1 | 1.2 | 5240 | 99.9 | 4.183 | 100.0 |
| 68.65/30.85/0.5 | 841 | 2258 | 87.0 | 1.2 | 5237 | 99.9 | 4.184 | 100.0 |
| 68.4/30.6/1 | 840 | 2256 | 86.8 | 1.3 | 5231 | 99.8 | 4.185 | 100.0 |
| 67.4/29.6/3 | 836 | 2245 | 86.1 | 1.4 | 5200 | 99.2 | 4.189 | 100.1 |
| 66.4/28.6/5 | 830 | 2230 | 85.4 | 1.7 | 5161 | 98.4 | 4.193 | 100.2 |

| **XL40 and 32/1234yf/n-butane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0% | 4.212 | 100.0 |
| 34.95/64.95/0.1 | 670 | 1839 | 76.5 | 4.8 | 4175 | 100.0% | 4.213 | 100.0 |
| 34.85/64.85/0.3 | 669 | 1837 | 76.5 | 4.8 | 4169 | 99.8% | 4.213 | 100.0 |
| 34.75/64.75/0.5 | 668 | 1834 | 76.4 | 4.9 | 4164 | 99.7% | 4.214 | 100.0 |
| 34.5/64.5/1 | 665 | 1828 | 76.3 | 4.9 | 4151 | 99.4% | 4.217 | 100.1 |
| 33.5/63.5/3 | 654 | 1800 | 76.0 | 5.4 | 4094 | 98.0% | 4.227 | 100.4 |
| 32.5/62.5/5 | 641 | 1769 | 75.7 | 6.0 | 4030 | 96.5% | 4.238 | 100.6 |

| **XL20 and 32/1234yf/n-butane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0% | 4.261 | 100.0 |
| 21.45/78.45/0.1 | 568 | 1589 | 72.1 | 6.3 | 3609 | 99.9% | 4.262 | 100.0 |
| 21.35/78.35/0.3 | 566 | 1586 | 72.0 | 6.3 | 3603 | 99.8% | 4.263 | 100.0 |
| 21.25/78.25/0.5 | 565 | 1583 | 72.0 | 6.3 | 3597 | 99.6% | 4.264 | 100.1 |
| 21/78/1 | 563 | 1576 | 71.9 | 6.4 | 3581 | 99.1% | 4.266 | 100.1 |
| 20/77/3 | 550 | 1544 | 71.4 | 6.7 | 3516 | 97.3% | 4.278 | 100.4 |
| 19/76/5 | 536 | 1510 | 71.1 | 7.0 | 3445 | 95.4% | 4.290 | 100.7 |

**TABLE 12**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| 1234yf | 361 | 1018 | 59.1 | 0 | 2331 | 100.0 | 4.354 | 100.0 |
| | | | | | | | | |

| 1234yf/2-methylbutane | | | | | | | | |
|---|---|---|---|---|---|---|---|---|
| 99.9/0.1 | 360 | 1017 | 59.2 | 0 | 2327 | 99.8 | 4.355 | 100.0 |
| 99.7/0.3 | 359 | 1013 | 59.2 | 0.1 | 2320 | 99.5 | 4.356 | 100.0 |
| 99.5/0.5 | 357 | 1010 | 59.2 | 0.2 | 2313 | 99.2 | 4.358 | 100.1 |
| 99/1 | 353 | 1001 | 59.4 | 0.5 | 2296 | 98.5 | 4.361 | 100.2 |
| 97/3 | 337 | 965 | 60.0 | 1.7 | 2221 | 95.3 | 4.373 | 100.4 |
| 95/5 | 320 | 928 | 61.0 | 3.2 | 2139 | 91.8 | 4.376 | 100.5 |

| **XL41 and 32/1234yf/2-methylbutane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.85/31.05/0.1 | 840 | 2257 | 87.3 | 1.2 | 5235 | 99.8 | 4.183 | 100.0 |
| 68.75/30.95/0.3 | 837 | 2250 | 87.3 | 1.4 | 5219 | 99.5 | 4.183 | 100.0 |
| 68.65/30.85/0.5 | 834 | 2244 | 87.3 | 1.5 | 5203 | 99.2 | 4.183 | 100.0 |
| 68.4/30.6/1 | 826 | 2227 | 87.3 | 1.8 | 5162 | 98.5 | 4.182 | 100.0 |
| 67.4/29.6/3 | 794 | 2159 | 87.6 | 3.2 | 4989 | 95.2 | 4.175 | 99.8 |
| 66.4/28.6/5 | 759 | 2089 | 88.5 | 4.8 | 4796 | 91.5 | 4.153 | 99.3 |

| **XL40 and 32/1234yf/2-methylbutane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0 |
| 34.95/64.95/0.1 | 668 | 1837 | 76.6 | 4.8 | 4169 | 99.8 | 4.213 | 100.0 |
| 34.85/64.85/0.3 | 665 | 1829 | 76.6 | 5.0 | 4153 | 99.4 | 4.213 | 100.0 |
| 34.75/64.75/0.5 | 662 | 1822 | 76.7 | 5.1 | 4137 | 99.0 | 4.214 | 100.0 |
| 34.5/64.5/1 | 653 | 1804 | 76.8 | 5.5 | 4096 | 98.1 | 4.216 | 100.1 |
| 33.5/63.5/3 | 618 | 1729 | 77.5 | 7.3 | 3925 | 94.0 | 4.216 | 100.1 |
| 32.5/62.5/5 | 580 | 1652 | 78.7 | 9.5 | 3738 | 89.5 | 4.215 | 100.1 |

| **XL20 and 32/1234yf/2-methylbutane (wt.%)** | **Evap Press (kPa)** | **Cond Press (kPa)** | **Compr Disch Temp (C)** | **Average Temp Glide (K)** | **Cooling CAP (kJ/m3)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0 |
| 21.45/78.45/0.1 | 567 | 1587 | 72.1 | 6.3 | 3604 | 99.8 | 4.262 | 100.0 |
| 21.35/78.35/0.3 | 563 | 1579 | 72.1 | 6.5 | 3589 | 99.4 | 4.263 | 100.0 |
| 21.25/78.25/0.5 | 560 | 1572 | 72.2 | 6.6 | 3574 | 98.9 | 4.265 | 100.1 |
| 21/78/1 | 552 | 1554 | 72.3 | 7.0 | 3536 | 97.9 | 4.269 | 100.2 |
| 20/77/3 | 520 | 1482 | 72.8 | 8.6 | 3377 | 93.5 | 4.278 | 100.4 |
| 19/76/5 | 485 | 1408 | 73.7 | 10.6 | 3207 | 88.8 | 4.276 | 100.4 |

**TABLE 13**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |
| | | | | | | | | |

| **1234yf/p-xylene** | | | | | | | | |
|---|---|---|---|---|---|---|---|---|
| 99.98/.02 | 354 | 1012 | 60.2 | 0.8 | 2292 | 98.3 | 4.304 | 98.9 |
| 99.96/.04 | 346 | 1006 | 61.4 | 1.7 | 2250 | 96.5 | 4.250 | 97.6 |
| 99.94/.06 | 338 | 1000 | 62.8 | 2.7 | 2205 | 94.6 | 4.190 | 96.2 |
| 99.9/0.1 | 319 | 987 | 65.9 | 4.8 | 2102 | 90.2 | 4.052 | 93.1 |

| **XL41 and 32/1234yf/p-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.89/31.09/0.02 | 830 | 2253 | 88.5 | 1.8 | 5172 | 98.6 | 4.136 | 98.9 |
| 68.88/31.08/0.04 | 818 | 2245 | 89.8 | 2.4 | 5099 | 97.3 | 4.088 | 97.7 |
| 68.87/31.07/0.06 | 805 | 2237 | 91.1 | 3.0 | 5023 | 95.8 | 4.038 | 96.5 |
| 68.85/31.05/0.1 | 779 | 2221 | 94.2 | 4.3 | 4861 | 92.7 | 3.931 | 94.0 |

| **XL40 and 32/1234yf/p-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0 |
| 34.99/64.99/0.02 | 659 | 1832 | 77.8 | 5.5 | 4111 | 98.4 | 4.160 | 98.8 |
| 34.98/64.98/0.04 | 646 | 1824 | 79.1 | 6.2 | 4042 | 96.8 | 4.105 | 97.5 |
| 34.97/64.97/0.06 | 634 | 1816 | 80.5 | 7.0 | 3967 | 95.0 | 4.045 | 96.0 |
| 34.95/64.95/0.1 | 605 | 1800 | 84.0 | 8.8 | 3797 | 90.9 | 3.906 | 92.7 |

| **XL20 and 32/1234yf/p-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0 |
| 21.49/78.49/0.02 | 558 | 1583 | 73.3 | 7.0 | 3553 | 98.4 | 4.209 | 98.8 |
| 21.48/78.48/0.04 | 547 | 1575 | 74.5 | 7.8 | 3491 | 96.7 | 4.254 | 99.8 |
| 21.47/78.47/0.06 | 535 | 1567 | 75.9 | 8.6 | 3424 | 94.8 | 4.094 | 96.1 |
| 21.45/78.45/0.1 | 510 | 1551 | 79.1 | 10.5 | 3274 | 90.6 | 3.957 | 92.9 |

**TABLE 14**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |
| | | | | | | | | |
| 1234yf/o-xylene | | | | | | | | |
| 99.98/.02 | 352 | 1011 | 60.6 | 1.0 | 2280 | 97.8 | 4.287 | 98.5 |
| 99.96/.04 | 341 | 1004 | 62.2 | 2.2 | 2225 | 95.5 | 4.212 | 96.7 |
| 99.94/.06 | 330 | 997 | 64.1 | 3.5 | 2162 | 92.7 | 4.126 | 94.8 |
| 99.9/0.1 | 303 | 981 | 69.0 | 6.5 | 2007 | 86.1 | 3.906 | 89.7 |

| **XL41 and 32/1234yf/o-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.89/31.09/0.02 | 827 | 2251 | 88.8 | 1.9 | 5153 | 98.3 | 4.122 | 98.5 |
| 68.88/31.08/0.04 | 812 | 2242 | 90.5 | 2.7 | 5059 | 96.5 | 4.058 | 97.0 |
| 68.87/31.07/0.06 | 795 | 2233 | 92.4 | 3.5 | 4958 | 94.6 | 3.990 | 95.4 |
| 68.85/31.05/0.1 | 758 | 2214 | 96.8 | 5.3 | 4728 | 90.2 | 3.833 | 91.6 |

| **XL40 and 32/1234yf/o-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0 |
| 34.99/64.99/0.02 | 656 | 1831 | 78.1 | 5.6 | 4094 | 98.0 | 4.144 | 98.4 |
| 34.98/64.98/0.04 | 640 | 1822 | 79.9 | 6.6 | 4002 | 95.8 | 4.069 | 96.6 |
| 34.97/64.97/0.06 | 623 | 1812 | 81.9 | 7.6 | 3901 | 93.4 | 3.985 | 94.6 |
| 34.95/64.95/0.1 | 580 | 1793 | 87.3 | 10.2 | 3643 | 87.2 | 3.767 | 89.4 |

| **XL20 and 32/1234yf/o-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0 |
| 21.49/78.49/0.02 | 555 | 1581 | 73.6 | 7.2 | 3537 | 97.9 | 4.193 | 98.4 |
| 21.48/78.48/0.04 | 541 | 1572 | 75.3 | 8.2 | 3456 | 95.7 | 4.118 | 96.6 |
| 21.47/78.47/0.06 | 526 | 1563 | 77.2 | 9.3 | 3365 | 93.2 | 4.034 | 94.7 |
| 21.45/78.45/0.1 | 488 | 1544 | 82.2 | 11.9 | 3142 | 87.0 | 3.821 | 89.7 |

**TABLE 15**

| **Composition (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to 1234yf (%)** | **Cooling COP** | **Cooling COP relative to 1234yf (%)** |
|---|---|---|---|---|---|---|---|---|
| **1234yf** | 361 | 1018 | 59.1 | 0 | 2331 | 100.0 | 4.354 | 100.0 |
| | | | | | | | | |
| **1234yf/m-xylene** | | | | | | | | |
| 99.98/.02 | 353 | 1012 | 60.3 | 0.9 | 2290 | 98.2 | 4.303 | 98.8 |
| 99.96/.04 | 345 | 1006 | 61.5 | 1.8 | 2247 | 96.4 | 4.246 | 97.5 |
| 99.94/.06 | 336 | 1000 | 62.9 | 2.8 | 2200 | 94.4 | 4.183 | 96.1 |
| 99.9/0.1 | 317 | 987 | 66.3 | 5.0 | 2091 | 89.7 | 4.033 | 92.6 |

| **XL41 and 32/1234yf/m-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL41 (%)** | **Cooling COP** | **Cooling COP relative to XL41 (%)** |
|---|---|---|---|---|---|---|---|---|
| 68.9/31.1/0 (XL41) | 842 | 2260 | 87.3 | 1.2 | 5243 | 100.0 | 4.183 | 100.0 |
| 68.89/31.09/0.02 | 829 | 2253 | 88.5 | 1.8 | 5169 | 98.6 | 4.134 | 98.8 |
| 68.88/31.08/0.04 | 817 | 2244 | 89.9 | 2.4 | 5092 | 97.1 | 4.084 | 97.6 |
| 68.87/31.07/0.06 | 804 | 2236 | 91.3 | 3.0 | 5014 | 95.6 | 4.031 | 96.4 |
| 68.85/31.05/0.1 | 776 | 2220 | 94.5 | 4.4 | 4842 | 92.4 | 3.917 | 93.6 |

| **XL40 and 32/1234yf/m-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL40 (%)** | **Cooling COP** | **Cooling COP relative to XL40 (%)** |
|---|---|---|---|---|---|---|---|---|
| 35/65/0 (XL40) | 670 | 1840 | 76.6 | 4.8 | 4177 | 100.0 | 4.212 | 100.0 |
| 34.99/64.99/0.02 | 658 | 1832 | 77.8 | 5.5 | 4109 | 98.4 | 4.158 | 98.7 |
| 34.98/64.98/0.04 | 646 | 1824 | 79.2 | 6.2 | 4037 | 96.6 | 4.101 | 97.4 |
| 34.97/64.97/0.06 | 632 | 1816 | 80.7 | 7.1 | 3960 | 94.8 | 4.038 | 95.9 |
| 34.95/64.95/0.1 | 602 | 1799 | 84.3 | 8.9 | 3780 | 90.5 | 3.890 | 92.4 |

| **XL20 and 32/1234yf/m-xylene (wt.%)** | **Evap Press (kPa)** | **Cond Press (kPa)** | **Compr Disch Temp (C)** | **Average Temp Glide (K)** | **Cooling CAP (kJ/m³)** | **Cooling CAP relative to XL20 (%)** | **Cooling COP** | **Cooling COP relative to XL20 (%)** |
|---|---|---|---|---|---|---|---|---|
| 21.5/78.5/0 (XL20) | 568 | 1590 | 72.1 | 6.3 | 3612 | 100.0 | 4.261 | 100.0 |
| 21.49/78.49/0.02 | 558 | 1582 | 73.3 | 7.0 | 3552 | 98.3 | 4.208 | 98.8 |
| 21.48/78.48/0.04 | 546 | 1575 | 74.6 | 7.8 | 3487 | 96.5 | 4.150 | 97.4 |
| 21.47/78.47/0.06 | 534 | 1567 | 76.0 | 8.7 | 3418 | 94.6 | 4.088 | 95.9 |
| 21.45/78.45/0.1 | 507 | 1550 | 79.5 | 10.6 | 3259 | 90.2 | 3.942 | 92.5 |

## Claims

1. A composition comprising:
(i) at least HFO-1234yf;
(ii) at least one of a C₁ and/or C₂ hydrofluorocarbon, and optionally carbon dioxide;
(iii) an effective stabilizing amount of at least one oligomerization inhibitor which is xylene and comprises one of meta-, ortho- para- xylene; and,
(iv) optionally, at least one additional HFO, HCFO, HFC different from (ii), HCC, HCFC, nitrogen, and air component.

2. The composition according to claim 1, wherein the effective stabilizing amount is greater than zero to about 0.5 wt.% based on the weight of (i), (ii), and (iv).

3. The composition according to claim 1, wherein (ii) comprises at least one of HFC-32, HFC-125, HFC-134a and carbon dioxide.

4. The composition according to claim 1, wherein the C₁ hydrofluorocarbon of (ii) comprises HFC-32, or wherein the C₂ hydrofluorocarbon of (ii) comprises HFC-134a, or wherein the C₁ and C₂ hydrofluorocarbons of (ii) comprise at least HFC-32 and one of HFC-125, HFC-134a, and carbon dioxide.

5. The composition according to claim 1,
wherein up to about 0.2 wt.% inhibitor is present, based on the weight of (i), (ii), and (iv); or
wherein up to about 0.1 wt.% inhibitor is present, based on the weight of (i), (ii), and (iv); or
wherein up to about 0.05 wt.% inhibitor is present, based on the weight of (i), (ii), and (iv); or
wherein up to about 0.01 wt.% inhibitor is present, based on the weight of (i), (ii), and (iv).

6. The composition according to claim 1, comprising
a. from about 20 to about 40 weight percent HFO-1234yf; or
b. from about 28 to about 32 weight percent HFO-1234yf; or
c. from about 30 to about 32 weight percent HFO-1234yf; or
d. from about 62 to about 65 weight percent HFO-1234yf; or
e. from about 76 to about 80 weight percent HFO-1234yf.

7. A storage stable refrigerant comprising a pressurized container filled with the refrigerant composition according to claim 1.

8. A method of providing a refrigerant system with an oligomerization stabilized 1234yf composition comprising, removing refrigerant from an existing system and transferring a stabilized refrigerant from one a pressurized container filled with the composition of claim 1.

9. A method of transferring heat comprising using the stabilized composition according to claim 1.

10. A refrigerant system comprising a refrigerant circuit containing the composition according to claim 1.

11. A method of stabilizing an HFO-1234yf blend comprising adding to the blend one of meta-, ortho- or para- xylene in an amount effective to inhibit oligomerization of HFO-1234yf without affecting performance or compatibility of the stabilized blend, even when combined with refrigerant oils and other conventional additives.

12. A stabilized HFO-1234yf blend comprising one of meta-, ortho- or para- xylene in an amount effective to inhibit oligomerization of HFO-1234yf without affecting performance or compatibility of the stabilized blend, even when combined with refrigerant oils and other conventional additives.

13. The blend of claim 12, comprising:
from about 20 to about 40 weight percent HFO-1234yf; or
from about 28 to about 32 weight percent HFO-1234yf; or
from about 30 to about 32 weight percent HFO-1234yf; or
from about 62 to about 65 weight percent HFO-1234yf; or
from about 76 to about 80 weight percent HFO-1234yf; or
from about 55 about 75 weight percent HFO-1234yf and about 25 weight percent to 45 weight percent HFC-134a; or
from about 56 about 75 weight percent HFO-1234yf and about 25 weight percent to 44 weight percent HFC-134a; or
about 25.7 weight percent HFC-134a: or
about 14 weight percent HFC-134a; or
about 30 weight percent HFC-125, about 14 weight percent HFC-134a, about 36 weight percent HFC-32 and about 6 weight percent CO₂; or
from about 28 to about 32 weight percent HFO-1234yf and about 68 weight percent to 72 weight percent HFC-32.

14. The blend of claims 12 or 13, wherein the blend comprises up to 0.5 wt.% of meta-, ortho- or para- xylene.

## Patentansprüche

1. Zusammensetzung umfassend:
(i) mindestens HFO-1234yf;
(ii) mindestens eines von einem C₁- und/oder C₂-Fluorkohlenwasserstoff, und optional Kohlendioxid;
(iii) eine wirksame stabilisierende Menge mindestens eines Oligomerisierungsinhibitors, der Xylol ist und eines von meta-, ortho- oder para-Xylol umfasst; und
(iv) optional, mindestens eine weitere HFO-, HCFO-, HFC-Komponente, die sich von (ii) unterscheidet, HCC, HCFC, Stickstoff und Luft.

2. Zusammensetzung nach Anspruch 1, wobei die wirksame stabilisierende Menge größer als null bis etwa 0,5 Gew.-%, bezogen auf das Gewicht von (i), (ii) und (iv), ist.

3. Zusammensetzung nach Anspruch 1, wobei (ii) mindestens eines von HFC-32, HFC-125, HFC-134a und Kohlendioxid umfasst.

4. Zusammensetzung nach Anspruch 1, wobei das C₁₋ Fluorkohlenwasserstoff von (ii) HFC-32 umfasst, oder wobei das C₂₋ Fluorkohlenwasserstoff von (ii) HFC-134a umfasst, oder wobei die C₁- und C₂-Fluorkohlenwasserstoffe von (ii) mindestens HFC-32 und eines von HFC-125, HFC-134a und Kohlendioxid umfassen.

5. Zusammensetzung nach Anspruch 1,
wobei bis zu etwa 0,2 Gew.-% Inhibitor vorhanden sind, bezogen auf das Gewicht von (i), (ii) und (iv); oder
wobei bis zu etwa 0,1 Gew.-% Inhibitor vorhanden sind, bezogen auf das Gewicht von (i), (ii) und (iv); oder
wobei bis zu etwa 0,05 Gew.-% Inhibitor vorhanden sind, bezogen auf das Gewicht von (i), (ii) und (iv); oder
wobei bis zu etwa 0,01 Gew.-% Inhibitor vorhanden sind, bezogen auf das Gewicht von (i), (ii) und (iv).

6. Zusammensetzung nach Anspruch 1, umfassend
a. von etwa 20 bis etwa 40 Gewichtsprozent HFO-1234yf; oder
b. von etwa 28 bis etwa 32 Gewichtsprozent HFO-1234yf; oder
c. von etwa 30 bis etwa 32 Gewichtsprozent HFO-1234yf; oder
d. von etwa 62 bis etwa 65 Gewichtsprozent HFO-1234yf; oder
e. von etwa 76 bis etwa 80 Gewichtsprozent HFO-1234yf.

7. Lagerstabiles Kältemittel, umfassend einen Druckbehälter, der mit der Kältemittelzusammensetzung nach Anspruch1 gefüllt ist.

8. Verfahren zur Bereitstellung eines Kältemittelsystems mit einer oligomerisierungsstabilisierten 1234yf-Zusammensetzung umfassend das Entnehmen von Kältemittel aus einem bestehenden System und das Überführen eines stabilisierten Kältemittels aus einem mit der Zusammensetzung nach Anspruch 1 gefüllten Druckbehälter.

9. Verfahren zur Wärmeübertragung, umfassend die Verwendung der stabilisierten Zusammensetzung nach Anspruch 1.

10. Kältemittelsystem umfassend einen Kältemittelkreislauf, der die Zusammensetzung nach Anspruch 1 enthält.

11. Verfahren zur Stabilisierung eines HFO-1234yf-Gemisches, umfassend die Zugabe von einem von meta-, ortho- oder para-Xylol zu dem Gemisch in einer Menge, die wirksam ist, um die Oligomerisierung von HFO-1234yf zu hemmen, ohne die Leistung oder Kompatibilität des stabilisierten Gemisches zu beeinträchtigen, selbst wenn es mit Kältemittelölen und anderen herkömmlichen Additiven kombiniert wird.

12. Stabilisiertes HFO-1234yf-Gemisch umfassend eines von meta-, ortho- oder para-Xylol in einer Menge, die wirksam ist, um die Oligomerisierung von HFO-1234yf zu hemmen, ohne die Leistung oder Kompatibilität des stabilisierten Gemisches zu beeinträchtigen, selbst wenn es mit Kältemittelölen und anderen herkömmlichen Additiven kombiniert wird.

13. Gemisch nach Anspruch 12, umfassend:
von etwa 20 bis etwa 40 Gewichtsprozent HFO-1234yf; oder
von etwa 28 bis etwa 32 Gewichtsprozent HFO-1234yf; oder
von etwa 30 bis etwa 32 Gewichtsprozent HFO-1234yf; oder
von etwa 62 bis etwa 65 Gewichtsprozent HFO-1234yf; oder
von etwa 76 bis etwa 80 Gewichtsprozent HFO-1234yf; oder
von etwa 55 bis etwa 75 Gewichtsprozent HFO-1234yf und etwa 25 bis 45 Gewichtsprozent HFC-134a; oder
von etwa 56 bis etwa 75 Gewichtsprozent HFO-1234yf und etwa 25 bis 44 Gewichtsprozent HFC-134a; oder
etwa 25,7 Gewichtsprozent HFC-134a; oder
etwa 14 Gewichtsprozent HFC-134a; oder
etwa 30 Gewichtsprozent HFC-125, etwa 14 Gewichtsprozent HFC-134a, etwa 36 Gewichtsprozent HFC-32 und etwa 6 Gewichtsprozent CO₂; oder
von etwa 28 bis etwa 32 Gewichtsprozent HFO-1234yf und etwa 68 bis 72 Gewichtsprozent HFC-32.

14. Gemisch nach Ansprüche 12 oder 13, wobei das Gemisch bis zu 0,5 Gew.-% meta-, ortho- oder para-Xylol umfasst.

## Revendications

1. Composition comprenant :
(i) au moins HFO-1234yf ;
(ii) au moins un d'un hydrofluorocarbure C₁ et/ou C₂ et facultativement du dioxyde de carbone ;
(iii) une quantité stabilisante efficace d'au moins un inhibiteur d'oligomérisation qui est le xylène et qui comprend l'un des isomères suivants : méta-, ortho- ou para-xylène ; et,
(iv) facultativement, au moins un composant supplémentaire HFO, HCFO, HFC différent de (ii), HCC, HCFC, azote et air.

2. Composition selon la revendication 1, dans laquelle la quantité stabilisante efficace est supérieure à zéro à environ 0,5 % en poids par rapport au poids de (i), (ii) et (iv).

3. Composition selon la revendication 1, dans laquelle (ii) comprend au moins un de HFC-32, HFC-125, HFC-134a et du dioxyde de carbone.

4. Composition selon la revendication 1, dans laquelle l'hydrofluorocarbone C₁ de (ii) comprend du HFC-32, ou dans laquelle l'hydrofluorocarbone C₂ de (ii) comprend du HFC-134a, ou dans laquelle les hydrofluorocarbones C₁ et C₂ de (ii) comprennent au moins du HFC-32 et l'un des HFC-125, HFC-134a et du dioxyde de carbone.

5. Composition selon la revendication 1,
dans laquelle jusqu'à environ 0,2 % en poids d'inhibiteur est présent, sur la base du poids de (i), (ii) et (iv) ; ou
dans laquelle jusqu'à environ 0.1 % en poids d'inhibiteur est présent, sur la base du poids de (i), (ii) et (iv) ; ou
dans laquelle jusqu'à environ 0,05 % en poids d'inhibiteur est présent, sur la base du poids de (i), (ii) et (iv) ; ou
dans laquelle jusqu'à environ 0,01 % en poids d'inhibiteur est présent, sur la base du poids de (i), (ii) et (iv).

6. Composition selon la revendication 1, comprenant
a . d'environ 20 à environ 40 % en poids de HFO-1234yf ; ou
b. d'environ 28 à environ 32 % en poids de HFO-1234yf; ou
c. d'environ 30 à environ 32 % en poids de HFO-1234yf; ou
d. d'environ 62 à environ 65 % en poids de HFO-1234yf; or
e. d'environ 76 à environ 80 % en poids de HFO-1234yf.

7. Réfrigérant stable au stockage comprenant un récipient pressurisé rempli de la composition de réfrigérant selon la revendication 1.

8. Procédé de fourniture d'un système de réfrigération avec une composition 1234yf stabilisée par oligomérisation, comprenant le retrait du réfrigérant d'un système existant et le transfert d'un réfrigérant stabilisé à partir d'un récipient sous pression rempli de la composition selon la revendication 1.

9. Procédé de transfert de chaleur comprenant l'utilisation de la composition stabilisée selon la revendication 1.

10. Système de réfrigération comprenant un circuit de réfrigérant contenant la composition selon la revendication 1.

11. Procédé de stabilisation d'un mélange HFO-1234yf comprenant l'ajout au mélange de méta-, ortho- ou para-xylène en quantité efficace pour inhiber l'oligomérisation du HFO-1234yf sans affecter la performance ou la compatibilité du mélange stabilisé, même lorsqu'il est combiné avec des huiles réfrigérantes et d'autres additifs conventionnels.

12. Mélange HFO-1234yf stabilisé comprenant un de méta-, ortho- ou para-xylène en quantité efficace pour inhiber l'oligomérisation du HFO-1234yf sans affecter la performance ou la compatibilité du mélange stabilisé, même lorsqu'il est combiné avec des huiles réfrigérantes et d'autres additifs conventionnels.

13. Mélange selon la revendication 12, comprenant :
d'environ 20 à environ 40 % en poids de HFO-1234yf ; ou
d'environ 28 à environ 32 % en poids de HFO-1234yf ; ou
d'environ 30 à environ 32 % en poids de HFO-1234yf ; ou
d'environ 62 à environ 65 % en poids de HFO-1234yf ; ou
d'environ 76 à environ 80 % en poids de HFO-1234yf ; ou
d'environ 55 à 75 % en poids de HFO-1234yf et d'environ 25 à 45 % en poids de HFC-134a ; ou
d'environ 56 à 75 % en poids de HFO-1234yf et d'environ 25 à 44 % en poids de HFC-134a ; ou
environ 25,7 pour cent en poids de HFC-134a : ou
environ 14 pour cent en poids de HFC-134a ; ou
environ 30 % en poids de HFC-125, environ 14 % en poids de HFC-134a, environ 36 % en poids de HFC-32 et environ 6 % en poids de CO₂ ; ou
d'environ 28 à environ 32 pour cent en poids de HFO-1234yf et d'environ 68 à 72 pour cent en poids de HFC-32.

14. Mélange selon les revendications 12 ou 13, dans lequel le mélange comprend jusqu'à 0,5 % en poids de méta-, ortho- ou para- xylène.
